# EUROPÄISCHE PATENTSCHRIFT

(11) **EP 3 083 075 B1**
(45) Veröffentlichungstag und Bekanntmachung des Hinweises auf die Patenterteilung: **21.11.2018**
(21) Anmeldenummer: 14812507.3
(22) Anmeldetag: 16.12.2014
(51) Int. Cl.: B05D 5/00, B32B 27/08, B32B 27/36

(54) **MEHRSCHICHTAUFBAU AUS POLYCARBONAT UND POLYCARBONATBLENDS MIT HOHER OPTISCHER GÜTE, HOHER KRATZBESTÄNDIGKEIT UND WITTERUNGSFESTIGKEIT**
MULTILAYER STRUCTURE CONSISTING OF POLYCARBONATE AND POLYCARBONATE BLENDS WITH HIGH OPTICAL QUALITY, HIGH SCRATCH RESISTANCE AND WEATHER RESISTANCE
STRUCTURE MULTICOUCHES EN POLYCARBONATE ET ÉCRAN DE POLYCARBONATE AVEC UNE QUALITÉ OPTIQUE ÉLEVÉE, UNE RÉSISTANCE ÉLEVÉE À L'ABRASION ET UNE RÉSISTANCE AUX INTEMPÉRIES

(30) Priorität: 19.12.2013 EP 13198309
(43) Veröffentlichungstag der Anmeldung: 26.10.2016
(73) Patentinhaber: Covestro Deutschland AG, 51373 Leverkusen (DE)
(72) Erfinder: KÜHN, Frauke, 51373 Leverkusen (DE); BUCKEL, Frank, 47906 Kempen (DE); CAPELLEN, Peter, 47803 Krefeld (DE); MEYER, Alexander, 40489 Düsseldorf (DE)
(74) Vertreter: Levpat
(86) Internationale Anmeldenummer: PCT/EP2014/077876
(87) Internationale Veröffentlichungsnummer: WO 2015/091425

(56) Entgegenhaltungen:
- EP-A1- 2 063 685
- DE-A1-102007 050 192
- DE-A1-102008 010 752
- US-A1- 2007 212 548

## Beschreibung

Die Erfindung betrifft einen Mehrschichtaufbau enthaltend eine transparente Basisschicht enthaltend wenigstens einen transparenten thermoplastischen Kunststoff sowie weitere erfindungsgemäße Schichten, wie mindestens einen nicht transparenten Werkstoff, der ganz oder teilweise an die transparente Schicht angeformt ist, die Herstellung eines solchen Mehrschichtaufbaus, dessen Verwendung zur Herstellung von Formkörpern wie Kunststoff-Verscheibungen für Gebäude, Motorräder, Automobile, Schienen- und Luftfahrzeuge sowie Blenden und Säulen- sowie Karosserieabdeckungen sowie die Formkörper selbst. Der Mehrschichtaufbau ist dadurch gekennzeichnet, dass er eine hohe Kratzbeständigkeit und hohe Witterungsfestigkeit sowie dauerhaft ausgezeichnete optische Eigenschaften aufweist.

Verscheibungen aus Zusammensetzungen, enthaltend transparente thermoplastische Polymere wie z.B. Polycarbonat, bieten für den Fahrzeugbereich und für Gebäude viele Vorteile gegenüber herkömmlichen Verscheibungen aus Glas. Hierzu zählen z.B. erhöhte Bruchsicherheit und Gewichtsersparnis, die im Fall von Automobilverscheibungen eine höhere Insassensicherheit bei Verkehrsunfällen und niedrigeren Kraftstoffverbrauch ermöglichen. Schließlich lassen transparente Werkstoffe, die transparente thermoplastische Polymere enthalten, aufgrund der einfacheren Formbarkeit eine wesentlich größere Designfreiheit zu.

Scheiben im Bereich des Transportsektors enthalten häufig auch nicht-transparente Bereiche. Nicht-transparente Schichten sind z.B. bei Scheiben im Automobilbereich sehr häufig, da in diesen Bereich z.B. Funktionselemente verborgen werden können oder generell die Kleber für die Befestigung an der Automobilkarosserie aufgebracht werden.

Während thermoplastische Kunststoffe die oben beschriebenen vorteilhaften Eigenschaften aufweisen, zeigen sie für einige Anwendungen eine zu geringe Abriebs- und chemische Lösungsmittelbeständigkeit. Darüber hinaus sind sie wie viele andere organische polymere Materialien auch empfindlich gegen Abbau durch ultraviolettes Licht. Dies führt zu Vergilben und Erosion der Substratoberfläche.

Aus diesen Gründen werden thermoplastische Substrate wie beispielsweise Polycarbonatteile mit einem Schutzüberzug versehen. Dabei sind für den Außeneinsatz gerade solche Schutzsysteme besonders geeignet, die sowohl einen mechanischen Schutz gegen Abrieb und Verkratzung als auch einen exzellenten Schutz gegen Bewitterungseinflüsse, d. h. Beregnung, Temperatur und insbesondere ultraviolette Strahlung (UV) bilden.

Derartige beschichtete Polycarbonate sind z.B. in DE 102008010752 A und WO 2009049904 A beschrieben.

US 2007/0212548 A1 beschreibt einen Mehrschichtaufbau, der sich im Wesentlichen in der nicht transparenten Schicht vom vorliegenden Mehrschichtaufbau unterscheidet. Die nicht transparente Schicht ist eine Tinte ([0013], Zeile 5-6) enthaltend ein Polyesterharz. Die Schicht hat lediglich eine Dicke von größer 3µm, bevorzugt 5 bis 8 µm. Im Gegensatz dazu wird in der vorliegenden Anmeldung ein nicht transparentes Polycarbonat Blend in wesentlich dickerer Schicht von 1 mm bis 20 mm eingesetzt.

DE10 2007 050 192 A1 beschreibt eine Primerzusammensetzung, in der Triazine als UV Absorber eingesetzt werden. EP2063685 A1 beschreibt ein thermoplastisches Glazing Teil, bei dem wenigstens ein Draht in einen großen Teil der Oberfläche eingebettet ist. Ein Mehrschichtaufbau der vorliegenden Anmeldung wird nicht beschrieben.

Allerdings weisen die im Stand der Technik geschilderten Mehrschichtaufbauten mit einer Basisschicht aus einem transparenten thermoplastischen Kunststoff sowie mindestens einem nicht transparenten Werkstoff nicht die von Glas gewohnte und im Architektur- oder Automobilbereich gewünschte Langzeitstabilität auf. Der Begriff Langzeitstabilität im Sinne der vorliegenden Erfindung beschreibt dabei die Stabilität der Eigenschaften des gesamten Mehrschichtaufbaus wie Farbe, Trübungsfreiheit, Transparenz und optische Güte der Oberfläche über die Nutzungsdauer und unter Einwirkung der für die Anwendung typischen Umgebungsfaktoren (wie UV-Strahlung, Temperatur, Feuchtigkeit, Medien, abrasiver Verschleiß, etc.). Stabilität bedeutet hier nicht absolute Konstanz, sondern durchaus moderate Änderung innerhalb vorgegebener Grenzen.

Für die oben genannten Anwendungen kommt erschwerend hinzu, dass die Anforderungen an die Eigenschaften extrem hoch liegen, so dass wenig Spielraum für Eigenschaftsverluste gegeben ist. Im Automobilbau bestehen speziell für hochpreisige Fahrzeuge ambitionierte Anforderungen bezüglich des optischen Erscheinungsbildes und der optischen Kennwerte der verbauten Materialien. Inhomogenitäten (Oberflächenstörungen), beziehungsweise optische Störungen in der Bauteiloberfläche, Beeinträchtigungen in Glanz sowie Trübung sind in diesem Zusammenhang nicht akzeptabel.

Darüber hinaus müssen moderne Verscheibungssyteme im Architektur- und Automobilbereich auch funktionale Anforderungen erfüllen, die dem Komfort dienen, wie selektives Blocken von IR & UV-Strahlen, um ein starkes Aufheizen des Innenraums durch IR-Strahlen oder Schäden durch UV-Strahlen zu vermeiden.

Zudem sind aufgrund des immer komplexer werdenden Aufbaus von Fahrzeugbauteilen aktuell vermehrt effiziente Fertigungsverfahren gefragt, die es ermöglichen, die Bauteile in möglichst wenigen Schritten herzustellen.

Mehrschichtartikel aus Polycarbonat - insbesondere betreffend Mehrschichtartikel enthaltend eine Substratschicht aus Polycarbonat und mindestens eine Kratzfestschicht aus einem Siloxan-haltigen Lack - sind prinzipiell in der Literatur beschrieben.

So beschreibt die EP 2247446-A1 einen speziellen asymmetrischen Mehrschichtaufbau aus Polycarbonat. Jedoch wird kein Mehrschichtaufbau aus transparenten und nicht-transparenten Schichten beschrieben. Da sich ein derartiger Schichtaufbau in einer Bewitterung deutlich anders verhält, kann die EP 2247446 keine Anleitung zum Handeln geben, wie die beschriebene Aufgabenstellung zu lösen ist.

Die US 7442430 beschreibt Mehrschichtaufbauten aus Polycarbonat und Polymethylmethacrylat, welche eine hohe Bewitterungsstabilität aufweisen. Auch hier werden allerdings keine Mehrschichtartikel mit intransparenten Schichten erwähnt. Somit stellt auch diese Anmeldung keinen Hinweis bereit, wie das beschriebene Problem zu lösen ist.

Auch die WO 2011/032915 beschreibt einen speziellen Mehrlagenaufbau. Dieser Aufbau ist nicht Gegenstand der vorliegenden Erfindung.

Die EP 1624012-A beschreibt ein flächenförmiges Fensterelement mit Rahmenelement aus verschiedenen Thermoplasten sowie Kautschuken. Über die UV-Beständigkeit wird keine Aussage getroffen. Auch diese Anmeldung gibt keinen Hinweis zur Lösung der Aufgabenstellung.

Es ist Aufgabe der vorliegenden Erfindung, einen Mehrschichtaufbau enthaltend mindestens eine transparente Schicht und mindestens eine intransparente Schicht zur Verfügung zu stellen, welche insbesondere im intransparenten Bereich eine erhöhte Bewitterungsfestigkeit aufweisen. Damit ist z.B. eine höhere Lebensdauer der über den Substratschichten liegenden Deckschichten gemeint. Zusätzlich soll der Mehrschichtaufbau eine hohe Kratz- beziehungsweise Abriebfestigkeit aufweisen. Ferner soll der Mehrschichtaufbau dauerhaft ausgezeichnete optische Eigenschaften aufweisen, konkret einen reduzierten Verlust an Lichttransmission, eine reduzierte Trübungszunahme, eine geringe Farbänderung im transparenten Bereich sowie eine riss- und erosionsfreie Oberfläche jeweils nach Bewitterung bzw. Medieneinwirkung. Zudem sollen die einzelnen Schichten des Mehrschichtaufbaus eine sehr gute Haftung untereinander aufweisen.

Die Sonneneinstrahlung führt zu einer Erwärmung des Mehrschichtaufbaus. Diese wirkt sich insbesondere im intransparenten Bereich (z.B. in einer dunklen oder schwarzen Schicht) auf die Witterungsstabilität des Gesamtaufbaus aus. Dies äußert sich in Rissbildung, Mikrorissen und/oder Delamination der außenliegenden Schicht. In US 2007/0212548 A1 ist kein Hinweis enthalten wie die Probleme bei einer dickeren nicht-transparenten Schicht gelöst werden können.

Darüber hinaus lässt sich der Verbund aus Schicht B und C der vorliegenden Erfindung auf einfache Weise in einem 2 Komponenten- Spritzgussprozess herstellen. In US 2007/0212548 A1 wird der Verbund aus B und C in 2 unterschiedlichen Verarbeitungstechniken hergestellt ([0030], Zeilen 8-18), wobei die Tinte getrocknet und eingebrannt werden muss ([0032]).

Eine besondere Herausforderung ist dies bei Bauteilen, die mit einer nicht-transparenten Schicht umformt sind. Die dunkle Farbe führt zu einer deutlich schnelleren Alterung in der Bewitterung. Dies verdeutlicht Beispiel 5 und 6.

Ferner ist es eine Aufgabe der vorliegenden Erfindung ein Verfahren zur Herstellung des erfindungsgemäßen Mehrschichtaufbaus zur Verfügung zu stellen.

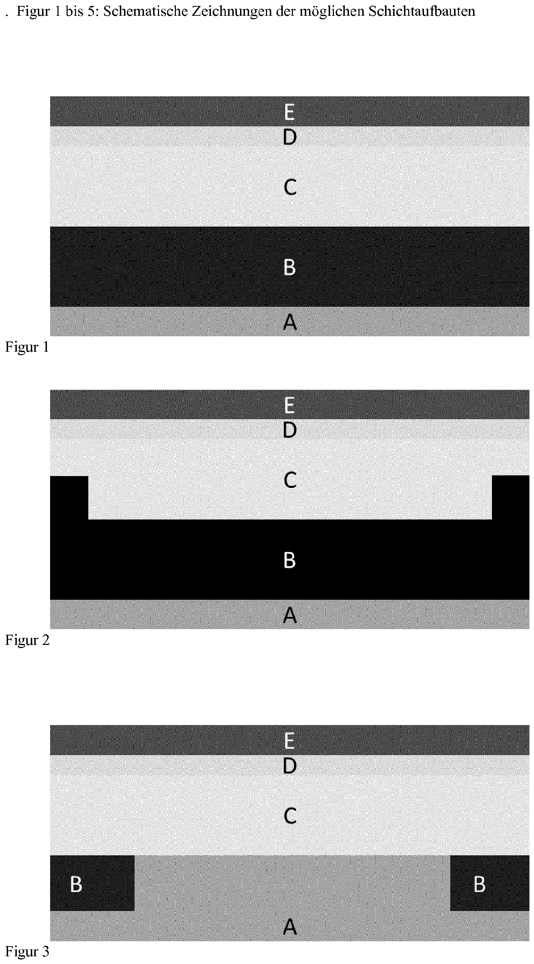

Die gestellte Aufgabe konnte überraschenderweise durch den erfindungsgemäßen Mehrschichtaufbau enthaltend die Schichten A enthaltend einen Polysiloxanblock (3 µm - 20 µm, bevorzugt 5 µm - 15 µm und insbesondere bevorzugt 6 µm bis 12, transparente Abnutzungsschutzschicht), B basierend auf einem Polymerblend enthaltend Polycarbonat (1 mm bis 20 mm, bevorzugt 1 mm bis 18 mm, nicht-transparente Schicht), C (1 mm bis 20 mm, bevorzugt 1 mm bis 18 mm, transparente Basisschicht), wobei Schicht C ein thermoplastischer Kunststoff ist, D (1 µm - 6 µm, bevorzugt 1,2 µm bis 5 µm, besonders bevorzugt 1,2 bis 4 µm, transparente UV Schutzschicht) wobei Schicht D eine Primerschicht ist, und E enthaltend einen Polysiloxanlack (3 µm bis 25 µm, bevorzugt 4 µm bis 15 µm transparente Abnutzungsschutzschicht) unter Einhaltung erfindungsgemäßer Schichtdickenbereiche gelöst werden. Hierbei liegt Schicht A auf der Seite des jeweiligen Innenraums (zum Beispiel Automobil- oder Gebäudeinnenraum) und Schicht E auf der Seite der jeweiligen Außenumgebung mit ihren entsprechenden Witterungseinflüssen. Somit ergibt sich von innen nach außen betrachtet die Schichtfolge A, B, C, D, E. Abbildung 1 zeigt schematische Zeichnungen der möglichen Schichtaufbauten. Schicht A befindet sich dabei auf der innenliegenden Seite, Schicht E ist die außenliegenden Seite.

Gegenstand der vorliegenden Erfindung ist daher ein Mehrschichtaufbau enthaltend die folgenden Schichten:
Schicht A enthaltend einen Polysiloxanlack (eine transparente Abnutzungsschutzschicht) mit einer Schichtdicke von 3 µm - 20 µm, bevorzugt 5 µm - 15 µm und insbesondere bevorzugt 6 µm bis 12,
Schicht B basierend auf einem Polymerblend enthaltend Polycarbonat (eine nicht-transparente Schicht) mit einer Schichtdicke von 1 mm bis 20 mm, bevorzugt 1 mm bis 18 mm,
Schicht C (eine transparente Basisschicht) mit einer Schichtdicke von 1 mm bis 20 mm, bevorzugt 1 mm bis 18 mm, wobei Schicht C ein thermoplastischer Kunststoff ist
Schicht D (eine transparente UV Schutzschicht) mit einer Schichtdicke von 1 µm bis 6 µm, bevorzugt 1,2 µm bis 5 µm, besonders bevorzugt 1,2 µm bis 4 µm, wobei Schicht D eine Primerschicht ist
Schicht E enthaltend einen Polysiloxanlack (eine transparente Abnutzungsschutzschicht) mit einer Schichtdicke von 3 µm bis 25 µm, bevorzugt 4 µm bis 15 µm,
wobei "transparent" bedeutet, dass der Kunststoff eine Lichttransmission von mindestens 6 % aufweist.

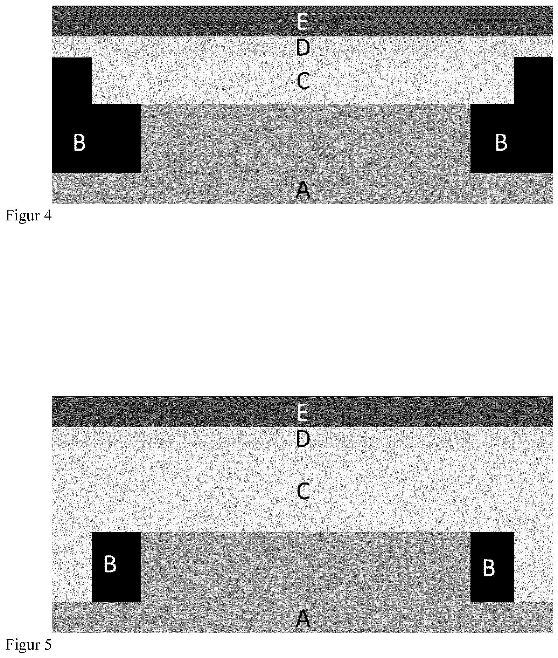

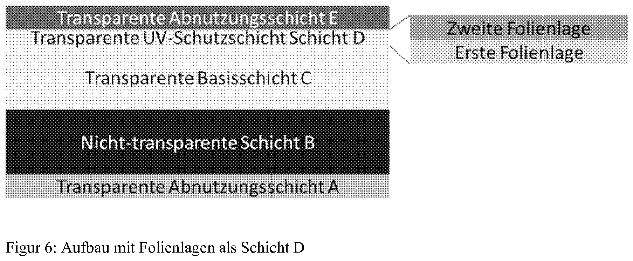

In Figur 1 bis 6 werden schematische Zeichnungen möglicher Schichtaufbauten dargestellt. In diesen Figuren ist Schicht E die Außenschicht und Schicht A die innenliegende Schicht.

Bevorzugt sind im oben genannten Mehrschichtaufbau Schicht E außen und Schicht A innen.

### Transparente Abnutzungsschutzschicht A:

Für die Abnutzungsschutzschicht A kommen prinzipiell folgende Beschichtungssysteme in Frage:
(i) Thermisch härtende Einschichtsysteme auf Basis eines Polysiloxanlackes, die im Bedarfsfall mit einer lediglich haftvermittelnden Primerschicht zwischen Substrat (Schicht B und /oder Schicht C) und Polysiloxandecklack beaufschlagt sein können. Diese sind u. a. in US 4,278,804, US 4,373,061,US 4,410,594, US 5,041,313 und EP-A-1 087 001 beschrieben.
   Ein Polysiloxanlack enthält siliciumorganische Verbindungen der Formel RₙSiX₄₋ₙ (mit n von 1 bis 4) wobei
   R für aliphatische C₁ bis Cio-Reste, bevorzugt Methyl-, Ethyl-, Propyl-, Isopropyl-, Butyl-, und Isobutyl-, sowie Arylreste, bevorzugt Phenyl, und substituierte Arylreste steht und
   X für H, aliphatische C₁ bis C₁₀-Reste, bevorzugt Methyl-, Ethyl-, Propyl-, Isopropyl-, Butyl-, und Isobutyl-, sowie Arylreste, bevorzugt Phenyl, substituierte Arylreste, für OH, Cl steht oder partielle Kondensate derselben.
   Der Polysiloxanlack wird nach dem Sol-Gel-Prozess hergestellt werden. Der Sol-Gel-Prozess ist ein Verfahren zur Synthese nichtmetallischer anorganischer oder hybridpolymerer Materialien aus kolloidalen Dispersionen, den sogenannten Solen.
   Als "lediglich haftvermittelnde Primerschicht" werden solche Primerschichten bezeichnet, die aus einem haftvermittelnden Polymer und optional einem oder mehreren UV-Absorbern bestehen.
   Besteht die Schicht A aus einem Einschichtsystem, so wird für deren Herstellung ein Siloxannetzwerk mit einem Haftvermittler auf Acrylatbasis bevorzugt, wobei die Schicht A einen UV-Absorber in Mengen von 5 - 15 Gew.-%, bevorzugt 8 - 13 Gew.-% enthält. Hierbei ist die Verwendung von UV-Absorbern aus der Klasse der Benzophenone und Resorcine bevorzugt.
   Als Benzophenone werden hierbei Verbindungen der Struktur (I) bevorzugt eingesetzt. 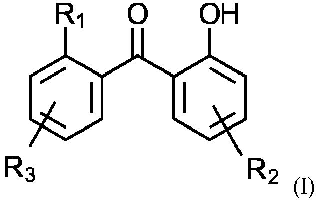
   Mit R1, R2 und R3 = H, C1-C8-Alkoxy, Carboxy, Halogen, Hydroxy, Amino oder Carbethoxy.
   Als Resorcine werden Verbindungen der Struktur (II) bevorzugt eingesetzt. 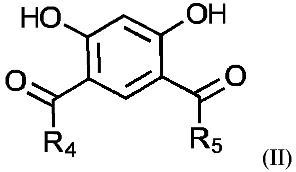
   Mit R4 und R5 = unabhängig voneinander substituierte monozyklische oder polyzyklische Aryle.
   Beispiele für kommerziell erhältliche Systeme zum Aufbau der Schicht A sind beispielsweise die Produkte PHC 587, PHC 587 B und PHC 587 C der Firma Momentive Performance Materials Inc. Wilton, CT USA sowie KASI Flex® oder Sun Flex®, beide von KRD Coatings, Geesthacht, Deutschland, oder Silvue® MP 100, SDC Coatings, Deutschland, oder Sicralan® MRL von GFO, Schwäbisch Gmünd, Deutschland.
   Bei Verwendung der vorgenannten Siloxansysteme sind Schichtdicken von 3 µm - 20 µm , bevorzugt 5 µm - 15 µm und insbesondere bevorzugt 6 µm bis 12 µm für die Schicht A bevorzugt.
   Bei den Zahlenangaben für die Schichtdicken sind die genannten Ober- und Untergrenzen jeweils eingeschlossen. Dies gilt für alle im Rahmen der vorliegenden Erfindung genannten Schichtdickenbereiche .
(ii) Thermisch härtende Mehrschichtsysteme mit einem UV-Schutzprimer und einem Decklack auf Basis eines Polysiloxanlackes. Geeignete Systeme sind bekannt z.B. aus US 5,391,795 und US 5,679,820 und "Paint & Coating Industrie; July 2001 Seite 64 bis 76: The Next Generation in Weatherable Hardcoats for Polycarbonate" by George Medford / General Electric Silicones, LLC, Waterford, NY; James Pickett / The General Electric Co., Corporate Research and Development, Schenectady, NY; and Curt Reynolds / Lexamar Corp., Boyne City, MI. Weiterhin sind geeignete Systeme solche, die in der PCT/EP2008/008835 beschrieben sind.

Beispielhaft sei hier folgendes System als Primersystem genannt, enthaltend:
a) 100.000 Gewichtsteilen eines Bindermaterials;
b) 0 bis 900.000 Gewichtsteile eines oder mehrerer Lösemittel,
c) 1 bis 6.000, bevorzugt 2.000-5.000 Gewichtsteile einer Verbindung der Formel (III):
d) 0 bis 5.000 Gewichtsteile weiterer lichtstabilisierender Substanzen 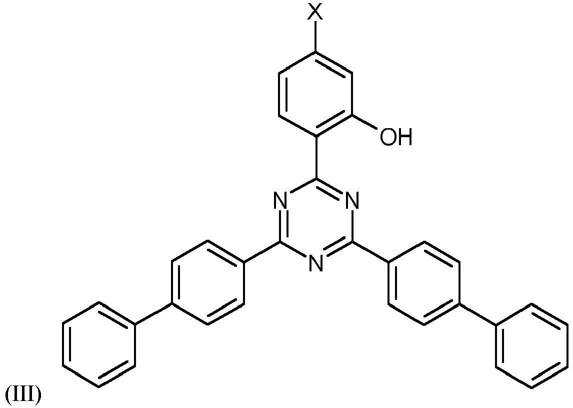
   wobei X = OR⁶, OCH₂CH₂OR⁶, OCH₂CH(OH)CH₂OR⁶ oder OCH(R⁷)COOR⁸, worin
   R⁶ = verzweigtes oder unverzweigtes C₁-C₁₃-Alkyl, C₂-C₂₀-Alkenyl, C₆-C₁₂-Aryl oder -CO-C₁-C₁₈-Alkyl,
   R⁷ = H oder verzweigtes oder unverzweigtes C₁-C₈-Alkyl, und
   R⁸ = C₁-C₁₂-Alkyl C₂-C₁₂-Alkenyl oder C₅-C₆-Cycloalkyl sind.

Beide Schichten, d.h. Primer und Decklack zusammen übernehmen hierbei die UV-Schutzausrüstung.

Ein kommerziell erhältliches System ist die Kombination aus SHP470FT2050 (UV-Schutzprimer) / AS4700 (Decklack) System der Firma Momentive Performance Materials.

Besteht die Schicht A aus einem Mehrschichtsystem mit einem UV-Schutzprimer und einem Decklack, so basiert der Primer bevorzugt auf einem Poly(alkyl)acrylat, besonders bevorzugt auf PMMA und enthält mindestens einen UV Absorber, bevorzugt ausgewählt aus der Gruppe umfassend Resorcine, Benzophenone und Triazine. Besonders bevorzugte Triazine sind im Rahmen der vorliegenden Erfindung das 2-[2-Hydroxy-4-(2-ethylhexyl)oxy]phenyl-4,6-di(4-phenyl)phenyl-1,3,5-triazin (CAS No. 204583-39-1) sowie das 2-[2-Hydroxy-4-[(octyloxycarbonyl)ethylidenoxy]phenyl-4,6-di(4-phenyl)phenyl- 1,3,5-triazin (CAS No. 204848-45-3). Besonders bevorzugte Benzophenone sind im Rahmen der vorliegenden Erfindung das 2,4-Dihydroxybenzophenon, sowie allgemein 2-Hydroxy-4-Alkoxybenzophenone. Besonders bevorzugte Resorcine sind im Rahmen der vorliegenden Erfindung allgemein 4,6-Dibenzoylresorcine.

Die Schichtdicke der Primerschicht liegt im Bereich von 1,0 µm bis 6,0 µm, bevorzugt 1,2 bis 5 µm, insbesondere bevorzugt 1,2 bis 4 µm. Kommerziell sind solche Primer beispielsweise in Form des SHP 470 FT 2050 Silicone Hardcoat Primer (Fa. Momentive Performance Materials Deutschland GmbH, Leverkusen, Deutschland) erhältlich.

Die Deckschicht wird bevorzugt durch ein Siloxannetzwerk, erhältlich durch thermisches Härten des vorne beschriebenen Polysiloxanlackes, gebildet, welches 5 - 12 Gew.-%, bevorzugt 7 - 10 Gew.-% (bezogen auf die Zusammensetzung der Deckschicht) eines UV Absorbers enthält. Als UV Absorber sind Resorcine, Benzophenone oder Triazine bevorzugt, insbesondere silylierte Resorcine, Benzophenone oder Triazine, besonders bevorzugt Resorcine der Struktur IV. 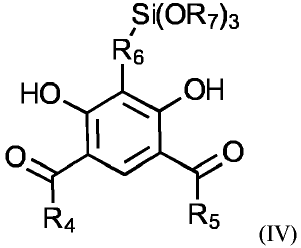 wobei R₄ und R₅ unabhängig voneinander ein substituiertes oder unsubstituiertes monzyklisches oder polyzyklisches aromatisches Radikal ist und R₆ ein Kohlenstoff oder eine lineare oder verzweigte aliphatische Kette mit weniger als 10 Kohlenstoffatomen ist und R₇ eine C₁-C₄-Alkylgruppe ist.

Ganz besonders bevorzugt ist die Verwendung von 4,6-Dibenzoyl-2-(3-triethoxysilylpropyl)resorcin (obige Formel mit R₄ = R₅ = phenyl; R₆ = C₃-Kette und R₇ = ethyl) (siehe Formel V)

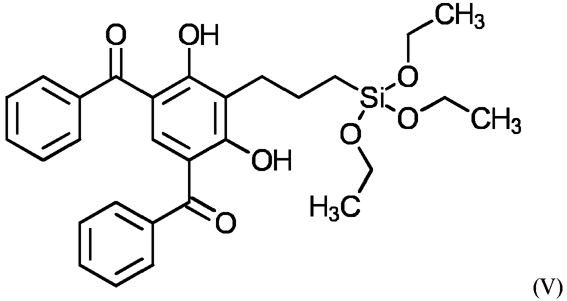

Die Dicke der Deckschicht liegt im Bereich von 2 µm - 14 µm, im Durchsichtbereich größtenteils im Bereich von 3 µm bis 8 µm. Ein Beispiel für ein kommerziell erhältliches Siloxannetzwerk für die Deckschicht ist das Produkt AS 4700 (Fa. Momentive Performance Materials Deutschland GmbH, Leverkusen, Deutschland).

Ggf. Zusatz weiterer Additive, z.B. von hydrophilisierenden Substanzen in allen Lacksystemen.

Die Gesamtschichtdicke der Abnutzungsschicht A beträgt 3µm bis 20 µm, bevorzugt 5 µm - 15 µm und insbesondere bevorzugt 6 µm bis 12 µm. Zudem erfüllt die Schicht A und Schicht E die praktischen Anforderungen an die Abriebs- und Medienbeständigkeit wie sie beim Reinigen der Scheibe auftreten. Als ausreichende Abriebbeständigkeit wird dabei eine Trübungszunahme von weniger als 4% nach 100 Zyklen Tabertest (durchgeführt gemäß UN ECE Regulation 43, Anhang 3, Absatz 4) für die innenliegende Schicht A bzw. eine Trübungszunahme kleiner 10% nach 500 Zyklen für die außenliegende Schicht E.

Die Medienbeständigkeit gegen Benzin bzw. Bezugskerosin unter Last gemäß UN ECE Regulation 43, Anhang 3, Absatz 11 muss gegeben sein.

### Nicht-transparente Schicht B

Die nicht-transparente Basischicht besteht aus einem Polymerblend, bevorzugt aus einem Polycarbonatblend, worin Polycarbonat die Hauptkomponente darstellt. Die nicht-transparente Schicht B ist in weiten Bereichen in direktem Kontakt mit der transparenten Basisschicht C. In speziellen Ausführungsformen kann dieser nicht transparente Werkstoff die Basisschicht C oder alternativ die Basisschicht C und weitere hiermit direkt oder indirekt verbundene Schichten oder alternativ den gesamten Mehrschichtaufbau ganz oder teilweise in den Randbereichen umfassen bzw. einrahmen. Bei einer Anformung des nicht transparenten Materials liegt der Übergang der Materialien vorzugsweise in Kantenbereichen, so dass eventuell auftretende Unebenheiten kaschiert werden. In jedem Fall gibt es Bereiche in denen die Basisschicht C auf der nichttransparent Schicht B liegt.

Diese nicht transparenten Werkstoffe können zur Ausbildung von Schwarzrändern beziehungsweise verstärkende Rahmenelementen dienen. Für die Herstellung von Schwarzrändern beziehungsweise verstärkenden Rahmenelementen bietet sich als Material die Verwendung thermoplastischer Kunststoffe enthaltend Füll- beziehungsweise Verstärkungsstoffe, insbesondere die Verwendung von derart ausgerüsteten Kunststoff Blends an. In diesem Zusammenhang sind Blends enthaltend Polycarbonat und mindestens einen weiteren thermoplastischen Kunststoff bevorzugt.

Die verwendeten Füll- und Verstärkungsstoffe können faser-, plättchen-, röhren-, stäbchen- oder kugelförmig bzw. sphärisch oder partikulär sein. Zu den im Sinne der vorliegenden Erfindung geeigneten Füll- und Verstärkungsstoffen zählen beispielsweise Talk, Wollastonit, Glimmer, Kaolin, Kieselgur, Calciumsulfat, Calciumcarbonat, Bariumsulfat, Glasfasern, Glas- oder Keramikkugeln, Glashohlkugeln oder Keramikhohlkugeln, Glas- oder Mineralwolle, Kohlefasern oder Carbon-Nanotubes. Bevorzugte Füllstoffe sind Füllstoffe, die ein isotropes Schwindungsverhalten der Zusammensetzung bewirken.

Im Rahmen der vorliegenden Erfindung ist die Verwendung von Talk und Kurzglasfasern besonders bevorzugt.

Glas- oder Keramikkugeln oder -hohlkugeln können dabei die Kratzfestigkeit dieser Oberfläche erhöhen.

In den Zusammensetzungen ist der Gehalt an Füll- und Verstärkungsstoffen von 5 Gew.% bis 40 Gew.%, vorzugsweise von 7 Gew.% bis 30 Gew.%, weiter bevorzugt von 8 Gew.% bis 25 Gew.%., wobei sich die Gewichtsangaben auf die Gesamtzusammensetzung von (B) beziehen.

Ferner kann das für die Herstellung des nicht transparenten Werkstoffs verwendete Material optional die in EP-A 0 839 623, WO-A 96/15102, EP-A 0 500 496 oder "Plastics Additives Handbook", Hans Zweifel, 5th Edition 2000, Hanser Verlag, München beschriebenen üblichen Polymeradditive enthalten.

Hierzu zählen unter anderem organische und/oder anorganische Farbmittel oder Pigmente, UV-Absorber, IR-Absorber, Entformungsmittel, Thermostabilisatoren oder Verarbeitungsstabilisatoren.

Bei dem Polymerblend handelt es sich bevorzugt um ein Blend enthaltend mindestens ein Polycarbonat und mindestens einen Polyester, wobei der Polyester bevorzugt ein Polyalkylenterephthalat, weiter bevorzugt ein Polyethylenterephthalat (PET) oder ein Polybutylenterephthalat (PBT) ist. Als Polyester besonders bevorzugt ist PET.

Der Mengenanteil von Polycarbonat in den Polycarbonat Polyester Blends beläuft sich auf 10 Gew.-% bis 90 Gew.-%, bevorzugt 30 Gew.-% bis 80 Gew.-%, weiter bevorzugt 35 Gew.-% bis 70 Gew.-%, besonders bevorzugt 40 Gew.-% bis 65 Gew.-% jeweils bezogen auf die Gesamtzusammensetzung des nicht transparenten Werkstoffs.

Der Mengenanteil des Polyesters in den Polycarbonat Polyester Blends beläuft sich auf 60 Gew.-% bis 5 Gew.-%, bevorzugt 50 Gew.-% bis 10 Gew.-%, weiter bevorzugt 35 Gew.-% bis 10 Gew.-%, besonders bevorzugt 25 Gew.-% bis 15 Gew.-% jeweils bezogen auf die Gesamtzusammensetzung des nicht transparenten Werkstoffs.

Optional können die Zusammensetzungen der Polycarbonatblends der Schicht B auch Elastomermodifikatoren enthalten die in Mengen von 0 Gew.-% bis 25 Gew.-%, bevorzugt 3 Gew.-% bis 20 Gew.-%, weiter bevorzugt 6 Gew.-% 20 Gew.-% und besonders bevorzugt 8 Gew.-% bis 18 Gew.-% enthalten sein können. Auch hier beziehen sich die Gew.-% Angaben auf die Gesamtzusammensetzung des nicht transparenten Werkstoffs.

In einer alternativen speziellen Ausführungsform der vorliegenden Erfindung handelt es sich bei dem bei dem Polymerblend um eine Zusammensetzung umfassend die Polymere al bis a3, wobei
al 10 bis 100 Gew.-Teile, bevorzugt 60 bis 95 Gew.-Teile, besonders bevorzugt 75 bis 95 Gew.-Teile, insbesondere 85 bis 95 Gew.-Teile (bezogen auf die Summe der Komponenten A) und B) mindestens einer Komponente ausgewählt aus der Gruppe bestehend aus aromatischem Polycarbonat, aromatischem Polyestercarbonat, Polymethylmethacrylat-(Co)Polymer und Polystyrol-(Co)Polymer, ist und
a2 0 bis 90 Gew.-Teile, bevorzugt 5 bis 40 Gew.-Teile, besonders bevorzugt 5 bis 25 Gew.-Teile, insbesondere 5 bis 15 Gew.-Teile (bezogen auf die Summe der Komponenten A)und B) mindestens eines Propfpolymerisats. Das Propfpolymerisat ist bevorzugt hergestellt im Emulsionspolymerisationsverfahren, Suspensionsverfahren, Massepolymerisationsverfahren, oder Lösungsverfahren.
a3 optional kautschukfreies Vinylhomopolymerisat und/oder kautschukfreies Vinylcopolymerisat
wobei sich die Gewichtsteile der Komponenten a1 bis a3 zu 100 addieren .

Die Komponente a2 umfasst vorzugsweise ein oder mehrere Pfropfpolymerisate von
- F.1.1: 5 bis 95, vorzugsweise 30 bis 90 Gew.-%, wenigstens eines Vinylmonomeren auf
- F.1.2: 95 bis 5, vorzugsweise 70 bis 10 Gew.-% einer oder mehrerer Pfropfgrundlagen.

Die Glasübergangstemperaturen der Propfgrundlagen sind vorzugsweise < 10°C, vorzugsweise < 0°C, besonders bevorzugt < -20°C.

Die Pfropfgrundlage F.1.2 hat im allgemeinen eine mittlere Teilchengröße (dso-Wert) von 0,05 bis 10 µm, vorzugsweise 0,1 bis 5 µm, besonders bevorzugt 0,15 bis 1 µm.

Monomere F.1.1 sind vorzugsweise Gemische aus
- F.1.1.1: 50 bis 99 Gew.-Teilen Vinylaromaten und/oder kernsubstituierten Vinylaromaten (wie Styrol, α-Methylstyrol, p-Methylstyrol, p-Chlorstyrol) und/oder Methacrylsäure-(Ci-C₈)-Alkylester, wie Methylmethacrylat, Ethylmethacrylat), und
- F.1.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere F.1.1.1 sind ausgewählt aus mindestens einem der Monomere Styrol, α-Methylstyrol und Methylmethacrylat, bevorzugte Monomere F.1.1.2 sind ausgewählt aus mindestens einem der Monomere Acrylnitril, Maleinsäureanhydrid und Methylmethacrylat. Besonders bevorzugte Monomere sind F.1.1.1 Styrol und F.1.1.2 Acrylnitril.

Für die Pfropfpolymerisate F.1 geeignete Pfropfgrundlagen F.1.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen F.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß F.1.1.1 und F.1.1.2), mit der Maßgabe, dass die Glasübergangstemperatur der Komponente B.2 unterhalb < 10°C, vorzugsweise < 0°C, besonders bevorzugt < -20°C liegt. Besonders bevorzugt ist reiner Polybutadienkautschuk.

Besonders bevorzugte Polymerisate F.1 sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage F.1.2 beträgt mindestens 30 Gew.-%, vorzugsweise mindestens 40 Gew.-% (in Toluol gemessen).

Die Glasübergangstemperaturen wird mittels dynamischer Differenz-Thermoanalyse (DSC) gemäß der Norm DIN EN 61006 bei einer Heizrate von 10 K/min mit Definition der T_{g} als Mittelpunkttemperatur (Tangentenmethode) bestimmt.

Bevorzugt ist al) Polycarbonat und a2 Acrylnitrilbutadienstyrol (ABS).

Zum Vermeiden von Bauteilspannungen ist darauf zu achten, dass die thermischen Ausdehnungskoeffizienten der einzelnen Schichten durch eine geeignete Materialauswahl aufeinander abgestimmt sind.

Dies ist insbesondere dann wichtig, wenn auf den Träger des erfindungsgemäßen Fahrzeugbauteils ein Schwarzrand beziehungsweise Rahmenelement unmittelbar aufgebracht wird.

Hierbei hat es sich als vorteilhaft herausgestellt, für den Schwarzrand beziehungsweise das Rahmenelement ein Material zu wählen, dessen linearer thermischer Ausdehnungskoeffizient in Längsrichtung (d.h. vom Anguss betrachtet in Richtung des Schmelzflusses, nachfolgend als RS abgekürzt) niedriger ist, als der des Materials des Trägers. Zudem sollte das RS/QS-Verhältnis des linearen thermischen Ausdehnungskoeffizienten des jeweiligen Materials in einem relativ engen Bereich liegen, wobei QS die Querrichtung, d. h. die Richtung orthogonal zur vom Anguss betrachteten Richtung des Schmelzflusses meint.

In einer Ausführungsform der vorliegenden Erfindung ist der lineare thermische Ausdehnungskoeffizient des Rahmenmaterials in Längsrichtung um 1x10⁻⁵ bis 3x10⁻⁵ (mm/mm K) niedriger als der des Trägermaterials.

Der Quotient RS/RQ sollte in einem Bereich von 0,6 bis 1,0 liegen.

Das Material zur Ausbildung des Schwarzrandes beziehungsweise des verstärkenden Rahmenelements wird bevorzugt durch Hinterspritzen, besonders bevorzug partielles Hinterspritzen, in einer Schichtdicke von 1 bis 20, bevorzugt 1 - 18mm, des Mehrschichtaufbaus mit diesem verbunden.

### Basisschicht C:

Die Basisschicht C enthält mindestens einen transparenten thermoplastischen Kunststoff, und kann vollkommen eben, unterschiedlich stark gekrümmt beziehungsweise in Form von Wölbungen, Wellen oder weiteren Formen dreidimensional ausgeformt sein. Hierbei kann die Basisschicht darüber hinaus zusätzlich weiter strukturiert und/oder ausgeformt sein.

Transparent im Sinne der vorliegenden Erfindung bedeutet, dass der Kunststoff eine Lichttransmission (in Anlehnung an ASTM 1003 bzw. ISO 13468; angegeben in % und Lichtart D65/10°) von mindestens 6 %, weiter bevorzugt von mindestens 12 %, und besonders bevorzugt von mindestens 23 % aufweist. Weiterhin ist die Trübung vorzugsweise kleiner als 3 %, weiter bevorzugt kleiner als 2,5 %, und besonders bevorzugt kleiner als 2,0 %.

Thermoplastische Kunststoffe für die Basisschicht C des erfindungsgemäßen Mehrschichtaufbaus sind Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), Polyamid, cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) weiter bevorzugt Polycarbonat, Copolycarbonat, Polyestercarbonat, aromatische Polyester oder Polymethylmethacrylat, oder Mischungen der genannten Komponenten, und besonders bevorzugt Polycarbonat und Copolycarbonat.

Auch Mischungen von mehreren thermoplastischen Polymeren, insbesondere wenn sie transparent miteinander mischbar sind, sind möglich, wobei in einer speziellen Ausführungsform eine Mischung aus Polycarbonat mit PMMA (weiter bevorzugt mit PMMA < 2 Gew.%) oder Polyester bevorzugt ist.

Eine weitere spezielle Ausführungsform enthält in diesem Zusammenhang eine Mischung aus Polycarbonat und PMMA mit weniger als 2,0 Gew.%, vorzugsweise weniger als 1,0 Gew.%, weiter bevorzugt weniger als 0,5 Gew.%, wobei mindestens 0,01 Gew.% PMMA enthalten sind bezogen auf die Menge Polycarbonat, wobei das PMMA bevorzugt ein Molgewicht <40.000 g/mol aufweist. In einer besonders bevorzugten Ausführungsform beträgt der Anteil an PMMA 0,2 Gew.%, und besonders bevorzugt 0,1 Gew.%, bezogen auf die Menge Polycarbonat, wobei das PMMA bevorzugt ein Molgewicht <40.000 g/mol aufweist.

Eine alternative weitere spezielle Ausführungsform enthält eine Mischung aus PMMA und Polycarbonat mit weniger als 2 Gew.%, vorzugsweise weniger als 1 Gew.%, weiter bevorzugt weniger als 0,5 Gew.%, wobei mindestens 0,01 Gew.% Polycarbonat enthalten sind bezogen auf die Menge PMMA,

In einer besonders bevorzugten Ausführungsform beträgt der Anteil an Polycarbonat 0,2 Gew.%, und besonders bevorzugt 0,1 Gew.%, bezogen auf die Menge PMMA.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen oder beim Schmelzeumesterungsprozess Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (s.7, Z. 21 bis s. 10, Z. 5), EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es könne auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009 und DE 25 00 092 A1 (erfindungsgemäße 3,3-bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die thermoplastischen Kunststoffe der Basisschicht C können ferner enthalten:

### a) Entformungsmittel

Besonders geeignete Entformungsmittel für den erfindungsgemäßen Mehrschichtaufbau sind Pentaerythrittetrastearat (PETS) oder Glycerinmonostearat (GMS).

Bevorzugt werden 0,0 Gew.-% bis 1,0 Gew.-%, weiter bevorzugt 0,01 Gew.-% bis 0,50 Gew.-%, besonders bevorzugt 0,01 Gew.-% bis 0,40 Gew.-% ein oder mehrere Entformer, bezogen auf die Gesamtmenge an Entformern eingesetzt,

### b) Thermostabilisator / Antioxidans

In einer bevorzugten Ausführungsform enthält die Polymerzusammensetzung der Basisschicht C Thermo- bzw. Verarbeitungsstabilisatoren. Bevorzugt geeignet sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin,2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

Es werden 0,00 Gew.-%- 0,20 Gew.-%, bevorzugt 0,01 Gew.-% - 0,10 Gew.-%, ein oder mehrere Thermo- bzw. Verarbeitungsstabilisator, bezogen auf die Gesamtmenge an Thermo- bzw. Verarbeitungsstabilisatoren eingesetzt

### c) UV-Absorber

In einer bevorzugten Ausführungsform enthält die Basisschicht C weiterhin einen Ultraviolett-Absorber. Zum Einsatz in der erfindungsgemäßen Polymer-Zusammensetzung geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, Ciba Spezialitätenchemie, Basel), 2-(2'-Hydroxy-5'-(tert.-octyl)-phenyl)-benzotriazol (Tinuvin® 329, Ciba Spezialitätenchemie, Basel), 2-(2'-Hydroxy-3'-(2-butyl)-5'-(tert.butyl)-phenyl)-benzotriazol (Tinuvin® 350, Ciba Spezialitätenchemie, Basel), Bis-(3-(2H-benztriazolyl)-2-hydroxy-5-tert.-octyl)methan, (Tinuvin® 360, Ciba Spezialitätenchemie, Basel), (2-(4,6-diphenyl-1,3,5-triazin-2-yl)-5-(hexyloxy)-phenol (Tinuvin® 1577, Ciba Spezialitätenchemie, Basel), sowie der Benzophenone 2,4-Dihydroxybenzophenon (Chimasorb® 22 , Ciba Spezialitätenchemie, Basel) und 2-Hydroxy-4-(octyloxy)-benzophenon (Chimassorb® 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin® B-Cap, Clariant AG).
Es können auch Mischungen dieser Ultraviolett-Absorber eingesetzt werden.

Es werden 0,0 Gew% bis 20,00 Gew.-%, bevorzugt von 0,05 Gew% bis 10,00 Gew.-%, weiter bevorzugt von 0,10 Gew% bis 1,00 Gew.-%, noch weiter bevorzugt 0,10 Gew.-% bis 0,50 Gew.-% sowie ganz besonders bevorzugt 0,10 Gew.-% bis 0,30 Gew.-% mindestens ein oder mehrere UV-Absorber bezogen auf die Gesamtzusammensetzung des transparenten, thermoplastischen Materials eingesetzt.

### d) IR-Absorber

Geeignete IR-Absorber sind beispielsweise in EP 1 559 743 A1, EP 1 865 027 A1, DE 10022037 A1, DE 10006208 A1 sowie in den italienischen Patentanmeldungen RM2010A000225, RM2010A000227 sowie RM2010A000228 offenbart. Ganz besonders bevorzugt sind Boride auf Basis von Lanthanhexaborid (LaB₆) oder Mischungen enthaltend Lanthanhexaborid.

Ferner sind IR-absorbierende Additive aus der Gruppe der Wolframate, welche im Vergleich zu anorganischen IR-Absorbern auf Borid-Basis eine geringere Eigenabsorption im sichtbaren Spektralbereich verfügen und zu thermoplastischen Materialien mit geringerer Eigenfarbe führen, geeignet. Darüber hinaus besitzen sie eine wünschenswerte breite Absorptionscharakteristik im NIR-Bereich. Bei diesen Wolframaten handelt es sich um Wolframoxide auf Basis von WyOz (W = Wolfram, O = Sauerstoff; z/y = 2,20 - 2,99) oder auf Basis von MxWyOz (M = H, He, Alkalimetall, Erdalkalimetall, Seltene Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1, z/y = 2,2-3,0).

Die Herstellung und der Einsatz dieser Stoffe in thermoplastischen Materialien ist prinzipiell bekannt und beispielsweise in H. Takeda, K. Adachi, J. Am. Ceram. Soc. 90, 4059 - 4061, (2007), WO 2005037932, JP 2006219662, JP 2008024902, JP 2008150548, WO 2009/059901 und JP 2008214596 beschrieben.

Bevorzugt werden die IR-Absorber in einer Menge von 0,00150 Gew.-% bis 0,01500 Gew.-%, bevorzugt 0,00180 Gew% bis 0,01100 Gew.-% und besonders bevorzugt 0,00200 Gew% bis 0,00900 Gew.-% berechnet als Feststoffanteil an IR-Absorber in der Polymer-Gesamtzusammensetzung eingesetzt.

### e) Farbmittel:

Als Farbmittel werden optional anorganische, nanoskalige Pigmente eingesetzt, vorzugsweise Ruß. Der nanoskalige Ruß wird in der erfindungsgemäßen Zusammensetzung bevorzugt in Konzentrationen von 0,00000 Gew.-% bis 0,01 Gew.-% eingesetzt.

Insbesonders bevorzugte Farbmittel und Farbmittelkombinationen für die Basischicht C sind in US 20120157587 beschrieben.

### f) Weitere Additive

Weitere Additive wie z.B. die in EP-A 0 839 623, WO-A 96/15102, EP-A 0 500 496 oder "Plastics Additives Handbook", Hans Zweifel, 5th Edition 2000, Hanser Verlag, München beschriebenen Polymeradditive (vorgenannte ausgenommen).

In einer besonders bevorzugten Ausführungsform der vorliegenden Erfindung ist der thermoplastische Kunststoff für den Träger des Fahrzeugbauteils ein Polycarbonat mit einem Molekulargewicht M_{w} von 22.000 bis 35.000, weiter bevorzugt von 24.000 bis 31.000 und besonders bevorzugt von 25.000 bis 30.000 ermittelt durch Gelpermeationschromatographie mit Polycarbonateichung .

In einer besonders bevorzugten Ausführungsform ist lineares Polycarbonat auf Basis von Bisphenol A mit MVR 5-20, bevorzugt 6-18, insbesondere bevorzugt 8-16, und ganz besonders bevorzugt 10-15 cm3/10min bei 300 °C und 1,2 kg Beladung gemäß ISO 1133 enthaltend Phenol und / oder tert.-Butylphenol und /oder Cumylphenol als Kettenabbrecher besonders bevorzugt.

Die Fließfähigkeit des für die Herstellung der Basisschicht verwendeten Polycarbonats reicht ferner aus, um im Spritzprägeprozess Fließwege von 600 mm bis 1200 mm, bevorzugt 800 mm bis 1100 mm, besonders bevorzugt 900 mm bis 1000 mm zu realisieren, wobei die Schmelzetemperatur vorzugsweise von 280 °C bis 320 °C, weiter bevorzugt von 300 °C bis 310 °C beträgt, die Werkzeugtemperatur vorzugsweise von 60 °C bis 110 °C, weiter bevorzugt von 80 °C bis 100 °C beträgt, der Fülldruck von 50 bar bis 1000 bar, weiter bevorzugt von 80 bar bis 750 bar und besonders bevorzugt von 100 bar bis 500 bar liegt, und der Prägespalt von 0,5 mm bis 10 mm, vorzugsweise von 2 mm bis 7mm, besonders bevorzugt von 5 mm bis 6 mm ist. Zwischen B und A befindet sich optional ein Siebdruck (auf Teilen der Scheibe, für nicht transparenten Bereich oder Heizung / Antennen) oder eine 2 K Spritzgusskomponente.

Die Basisschicht C ist im Rahmen der vorliegenden Erfindung entweder einschichtig oder wird durch Laminieren, Coextrusion oder Hinterspritzen aus 2 oder mehr Schichten erzeugt. Bevorzugt ist ein einschichtiger Aufbau der Basisschicht C.

Die transparente Basisschicht C weist Schichtdicken im Bereich von 1 mm - 20 mm, bevorzugt 1 mm - 18 mm auf. Für die nachfolgenden Anwendungsbereiche gelten die nachfolgenden erfindungsgemäßen Schichtdicken.
Flugzeug: 16 mm aus 2 Schichten laminiert
Frontscheibe: 3-10 / 4-8 / 5-8 mm
Panoramadach: 3-10 / 4-8 / 4-6 mm
Streuscheibe: 1-5 / 1-3 mm
Seitenscheibe: 1-10 / 1-8 / 2-6 mm

### Schicht D (transparente UV Schutzschicht)

Die Schicht D ist eine Primerschicht, welche bevorzugt auf einem Poly(alkyl)acrylat basiert, besonders bevorzugt auf PMMA, enthaltend mindestens einen UV Absorber, bevorzugt ausgewählt aus der Gruppe umfassend Benzophenone, Resorcine und Triazine. Besonders bevorzugte Triazine sind im Rahmen der vorliegenden Erfindung das 2-[2-Hydroxy-4-(2-ethylhexyl)oxy]phenyl-4,6-di(4-phenyl)phenyl-1,3,5-triazin (CAS No. 204583-39-1) sowie das 2-[2-Hydroxy-4-[(octyloxycarbonyl)ethylidenoxylphenyl-4,6-di(4-phenyl)phenyl-1,3,5-triazin (CAS No. 204848-45-3). Besonders bevorzugte Benzophenone sind im Rahmen der vorliegenden Erfindung das 2,4-Dihydroxybenzophenon, sowie allgemein 2-Hydroxy-4-alkoxybenzophenone. Besonders bevorzugte Resorcine sind allgemein 4,6-Dibenzoylresorcine (also 4,6-Dibenzoylresorcine, sowie substituierte 4,6-Dibenzoylresorcine).

Bevorzugt ist eine Primerzusammensetzung wie für Schicht A in Absatz ii) beschrieben, enthaltend:
a) 100.000 Gewichtsteilen eines Bindermaterials;
b) 0 bis 900.000 Gewichtsteile eines oder mehrerer Lösemittel,
c) 1 bis 6.000, bevorzugt 2.000-5.000 Gewichtsteile einer Verbindung der Formel (III) wie oben definiert,
d) 0 bis 5.000 Gewichtsteile weiterer lichtstabilisierender Substanzen.

Die Schichtdicke der Schicht D liegt im Bereich von 1,0-6,0 bevorzugt im Bereich 1,2-5,0 µm, ganz besonders bevorzugt im Bereich 1,2-4,0 µm

Alternativ kann die Schicht D gebildet werden aus einem Folienverbund enthaltend einen Folienträger und eine hierauf aufgebrachte zweite Folienlage. Der Folienträger besteht hierbei bevorzugt auf Polycarbonat oder PMMA. Besonders bevorzugt als Material für den Folienträger ist Polycarbonat, insbesondere wenn auf den Folienträger Funktionselemente wie Antennen oder Heizelemente aufgebracht werden sollen. Bei der zweiten Folienlage kann es sich um eine Funktionsschicht handeln wie zum Beispiel um eine UV-Schutzschicht. Die zweite Folienlage besteht hierbei bevorzugt aus Polycarbonat oder PMMA. Im Rahmen einer speziellen Ausführungsform der vorliegenden Erfindung basiert die zweite Folienlage auf PMMA und enthält einen UV Absorber vom Typ der Triazine, insbesondere bevorzugt 2-[2-Hydroxy-4-[(octyloxycarbonyl)ethylidenoxylphenyl-4,6-di(4-phenyl)phenyl-1,3,5-triazin (CAS No. 204848-45-3). Der Folienverbund ist im erfindungsgemäßen Mehrschichtaufbau bevorzugt so orientiert, dass die Trägerfolie unmittelbar auf der Schicht C des Mehrschichtaufbaus aufliegt und die zweite Folienlage in Richtung von Schicht E orientiert ist.

Auch auf der zweiten Folienlage des Folienverbundes können zusätzliche Funktionselemente aufgebracht werden, z.B. IR reflektierende Folien oder Sputterschichten (3M-System / Southwall), Heizelemente, Antennenelemente, Siebdruck wie oben. Reflexionsschichten für IR- und UV-Strahlung zählen (IR-Strahlung von 750 nm - 2500 nm, UV-Strahlung von 180 nm bis 400 nm).

Figur 2 visualisiert einen möglichen Aufbau mit Folienlagen als Schicht D.

Die Aufbringung des Folienverbundes (Schicht D) auf die Schicht C des Mehrschichtaufbaus erfolgt durch Hinterspritzen oder Laminieren.

### Schicht E:

Die transparente Abnutzungsschutzschicht E kann im Rahmen der vorliegenden Erfindung auf einem Siloxannetzwerk basieren, welches bevorzugt mit mindestens einem UV Absorber ausgerüstet ist. Als UV Absorber sind hierbei Resorcine, Benzophenone, Benzotriazole und Triazine bevorzugt, besonders bevorzugt sind Resorcine. Besonders bevorzugt Resorcine der Formel IV; ganz besonders bevorzugt sind Resorcine der Formel V.

Der UV Absorber wird in Mengen von 5 - 12 Gew.-%, bevorzugt 7 - 10 Gew.-% eingesetzt.

Die Schichtdicke der transparenten Abnutzungsschutzschicht E liegt im Bereich 3 bis 25 µm, wobei der Großteil der Schichtdicke im Durchsichtbereich 4 bis 15 µm beträgt.

Alternativ kann die Schicht E ausschließlich aus einer Silicaschicht mit einer Schichtdicke im Bereich 1 µm bis 5 µm bevorzugt 2 µm bis 4 µm bestehen hergestellt über Plasmaabscheidung oder verschiedene Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung.

In einer weiteren Ausführungsform kann die Silicaschicht auf eine wie oben beschriebenen Schicht basierend auf einem Siloxannetzwerk aufgebracht sein.

Die Silicaschicht kann UV Absorber (organisch und/oder anorganisch) enthalten.

In einer speziellen Ausführungsform bilden die Basisschicht C und alle mit dieser mittelbar oder unmittelbar verbundenen weiteren Schichten zusammen mit zusätzlichen integrierten Funktionselementen den erfindungsgemäßen Mehrschichtaufbau.

Folgende zusätzliche Funktionselemente können hierbei in dem erfindungsgemäßen Mehrschichtaufbau integral ausgeformt und/oder eingebunden sein:
- Heizelemente
- Antennen
- Lampengehäuse /-aufnahme z.B. für Rücklichter, Blinker, Bremslichter, Kennzeichenbeleuchtung und hochgesetzte Bremsleuchte
- Scheibenwischer und -motor)aufnahme
- Stylinglinien
- Strukturelemente für das Wassermanagement (Ableiten von Spritz- und Regenwasser)
- Solarmodule

In einer speziellen Ausführungsform kann eine weitere farbgebende Schicht enthaltend Farbmittel und oder Pigmente und oder eine wärmeabsorbierende bzw. wärmereflektierende Schicht im Mehrschichtaufbau zwischen einer oder mehreren der Schichten A, B, C, D und E enthalten sein. Hierbei basiert diese Schicht bevorzugt auf Polycarbonat oder PMMA, besonders bevorzugt auf Polycarbonat. Die zusätzliche farbgebende Schicht ist bevorzugt angeordnet zwischen den Schichten B und C oder zwischen den Schichten C und D. Die zusätzliche wärmeabsorbierende bzw. wärmereflektierende Schicht ist bevorzugt angeordnet zwischen den Schichten C und D. Die zusätzlichen Schichten oder Folien können ganzflächig oder teilweise bzw. punktuell auf die Fläche aufgebracht sein.

### Verfahren zur Herstellung des erfindungsgemäßen Mehrschichtaufbaus:

Der erfindungsgemäße Mehrschichtaufbau kann nach üblichen Verfahren hergestellt werden. Zu diesen Verfahren zählen die (Co)extrusion, Direct Skinning, Direct Coating, Insert Moulding, Folienhinterspritzen, Flut-, Tauch-, Sprüh- oder Plasmabeschichten, Aufwalzen, Aufschleudern oder sonstige dem Fachmann bekannte geeignete Verfahren.

Spritzgießverfahren sind dem Fachmann bekannt und beispielsweise im "Handbuch Spritzgießen", Friedrich Johannnaber/Walter Michaeli, München; Wien: Hanser, 2001, ISBN 3-446-15632-1 oder "Anleitung zum Bau von Spritzgießwerkzeugen", Menges/Michaeli/Mohren, München; Wien: Hanser, 1999, ISBN 3-446-21258-2 beschrieben.

Extrusionsverfahren sind dem Fachmann bekannt und beispielsweise für die Coextrusion unter anderem beschrieben in EP-A 0 110 221, EP-A 0 110 238 und EP-A 0 716 919. Für Details des Adapter- und Düsenverfahrens siehe Johannaber/Ast: "Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990.

Die Herstellung kann auf folgenden Routen erfolgen:
Prozedur 1:
   - Einlegen der Folie (Schicht D) ins Spritzgießwerkzeug, - Schließen des Werkzeuges
   - Einspritzen von Polycarbonat (Schicht C), anschließende Abkühlung auf <145°C Bauteiltemperatur (weiter bevorzugt <130°C, besonders bevorzugt <120°C), nicht aber unter 80 °C.
   - Drehen der Kavität in die nächste Position, zwecks Einspritzen einer Blendkomponente (Schicht B) Beim Schließen des Werkzeuges in dieser Position entsteht ein Zwischenraum zwischen 1. verfestigter Materialkomponente und Werkzeugwand.
   - Einspritzen der Blendkomponente anschließende Abkühlung auf <145°C Bauteiltemperatur (weiter bevorzugt <130°C, besonders bevorzugt <120°C), nicht aber unter 80 °C.

   In einer alternativen Ausführungsform der Prozedur 1 kann bei der Herstellung auch auf die Folie verzichtet werden.
Prozedur 2: Beschichtung im Anschluss an Prozedur 1 (mit oder ohne Folie)
   - Entformung
   - Abkühlen des Bauteils auf Raumtemperatur
   - Flutbeschichten des Bauteils mit dem Primer
   - Abdunsten der Lösemittel (vorzugsweise mindestens 30 min)
   - Einbrennen/Trocknen des Primers bei 20°C bis 200°C, vorzugsweise 40°C bis 130°C (vorzugsweise für 45 min bei 130 °C).
   - Abkühlen auf Raumtemperatur
   - Beschichten mit Decklack
   - Abdunsten der Lösemittel (vorzugsweise mindestens 30 min)
   - Einbrennen/Trocknen des Decklacks E bei 20°C bis 200°C, vorzugsweise 40°C bis 130°C (vorzugsweise für 45 min bei 130 °C)
   - Abkühlen auf Raumtemperatur

### Beispiele

Die verwendeten Materialien sind nachfolgend charakterisiert:
**Polycarbonat:** Lineares Bisphenol-A-Polycarbonat mit Endgruppen basierend auf Phenol mit einem MVR von 12,5 cm³/10 min, gemessen bei 300 °C und 1,2 kg Belastung gemäß ISO 103. Dieses Polycarbonat enthält noch eine Additivmischung bestehend aus Entformungsmittel, Thermostabilisator und UV-Stabilisator. Als Entformungsmittel wird 0,27 Gew.-% Pentaerythrittetrastearat (CAS 115-83-3), als Thermostabilisator 0,25 Gew.-% Triphenylphosphin (CAS 603-35-0) und als UV-Stabilisator 0,20 Gew.-% Tinuvin® 329 (CAS 3147-75-9) eingesetzt.

**Blend:** Polycarbonat/ABS-Blend enthaltend 82% Polycarbonat auf Bisphenol-A Basis und 9% nach dem Masseverfahren hergestelltes ABS, mit 9% Talkfüllung und einer Schmelzevolumenfließrate MVR gemäß ISO 1133 von 18 cm³/10 min , gemessen bei 260 °C und 5 kg Belastung. Zusätzlich sind 0,5% Entformungsmittel auf PETS-Basis und 0,2% Thermostabilisatoren enthalten. Das Produkt ist ein mit Ruß tiefschwarz eingefärbtes opakes Material.

Der **Kratzfestlack** AS4700 ist ein thermisch härtender Lack auf Silicon-Basis, enthaltend Isopropanol, n-Butanol und Methanol als Lösungsmittel, mit einem Feststoff-Gehalt von 25 Gew.-% , einer spezifischen Dichte von 0,92g/cm³ bei 20°C sowie einer Viskosität gemessen bei 25 °C von 3-7MPa s. Das Produkt ist erhältlich von der Momentive Performance Materials GmbH, Leverkusen.

SHP470 FT 2050 ist ein **Primer** mit einem Feststoffgehalt von 9 Gew.-%. einer spezifischen Dichte von 0,94 - 0.96g/cm³ bei 20°C und einer Viskosität bei 25 °C von 75 bis 95 MPa s basierend auf 1-Methoxy-2-propanol als Lösungsmittel. Das Produkt ist erhältlich von der Momentive Performance Materials GmbH, Leverkusen.

Der **Kratzfestlack** AS4000 ist ein thermisch härtender Lack auf Silicon-Basis, enthaltend Methanol, n-Butanol und Isopropanol als Lösungsmittel, mit einem Feststoff-Gehalt von 19-21 Gew.-% , einer spezifischen Dichte von 0,91g/cm³ bei 20°C sowie einer Viskosität gemessen bei 25 °C von 4-7MPa s. Das Produkt ist erhältlich von der Momentive Performance Materials GmbH, Leverkusen.

SHP401 ist ein **Primer** mit einem Feststoffgehalt von 2 Gew.-%. einer spezifischen Dichte von 0,925 g/cm³ bei 20°C und einer Viskosität bei 25 °C von 4-7 MPa s basierend auf 1-Methoxy-2-propanol und Diacetonalkohol als Lösungsmittel. Das Produkt ist erhältlich von der Momentive Performance Materials GmbH, Leverkusen.

Die Herstellung der Mehrschichtverbunde erfolgt folgendermaßen:
a) Einspritzen von Polycarbonat (Schicht C) in ein geeignetes Werkzeug, anschließende Abkühlung auf <145°C Bauteiltemperatur (weiter bevorzugt <130°C, besonders bevorzugt <120°C), nicht aber unter 80 °C.
b) Drehen der Kavität in die nächste Position, zwecks Einspritzen einer Blendkomponente (Schicht B) Beim Schließen des Werkzeuges in dieser Position entsteht ein Zwischenraum zwischen 1. verfestigter Materialkomponente und Werkzeugwand.
c) Einspritzen der Blendkomponente anschließende Abkühlung auf <145°C Bauteiltemperatur (weiter bevorzugt <130°C, besonders bevorzugt <120°C), nicht aber unter 80 °C.
d) Entformung
e) Abkühlen des Bauteils auf Raumtemperatur
f) Flutbeschichten des Bauteils mit dem Primer
g) Abdunsten der Lösemittel (vorzugsweise mindestens 30 min)
h) Einbrennen/Trocknen des Primers bei 20°C bis 200°C, vorzugsweise 40°C bis 130°C (vorzugsweise für 45 min bei 130 °C).
i) Abkühlen auf Raumtemperatur
j) Beschichten mit Decklack
k) Abdunsten der Lösemittel (vorzugsweise mindestens 30 min)
l) Einbrennen/Trocknen des Decklacks E bei 20°C bis 200°C, vorzugsweise 40°C bis 130°C (vorzugsweise für 45 min bei 130 °C)
m) Abkühlen auf Raumtemperatur

### Messung der Witterungsbeständigkeit

Die beschleunigte Bewitterung wird nach ASTM G155mod in einem Atlas Ci 65 A Bewitterungsgerät durchgeführt. Die Intensität beträgt 0,75W/m/m² bei 340nm Wellenlänge und ein Trocken/Sprüh-Zyklus beträgt 102:18 Minuten. Die Schwarztafeltemperatur beträgt 70±3°C und die Luftfeuchtigkeit während des Trockenzyklus ist 40±3%. Innerer und äußerer Filter sind boro-Filter.

Die Bewitterung wird abgebrochen, sobald Risse oder Mikrorisse auftreten und/oder Delaminationen zu erkennen sind. Erfindungsgemäße Aufbauten zeigen erste Fehlstellen frühestens nach 5500Std. beschleunigter Bewitterung.

### I. Vergleich verschiedener Schichtdicken bei Aufbau mit dem Lacksystem AS4700 mit SHP470FT 2050

Die folgenden Beispiele demonstrieren, dass es eine notwendige Mindestschichtdicke für Primer und Deckschicht gibt, da es sonst zu frühzeitigem Ausfallen in der Bewitterung kommt.

### Mehrschichtaufbau bestehend aus:

### Beispiel 1 (erfindungsgemäß)

A) SHP470 FT2050, Schichtdicke ca. 1,2µm + AS4700, Schichtdicke ca. 6,2µm
B) Blend-Komponente, Schichtdicke 1,9mm
C) Polycarbonat, Schichtdicke 4,8mm
   wobei B) mit C) hinterspritzt wird.
D) SHP470 FT2050, Schichtdicke 1,2µm
E) AS4700, Schichtdicke 6,2µm

### Beispiel 2 (erfindungsgemäß)

A) SHP470 FT2050, Schichtdicke ca. 1,9µm + AS4700, Schichtdicke ca. 8,6µm
B) Blend-Komponente, Schichtdicke 1,9mm
C) Polycarbonat,Schichtdicke 4,8mm
   wobei B) mit C) hinterspritzt wird.
D) SHP470 FT2050, Schichtdicke 1,9µm
E) AS4700, Schichtdicke 8,6µm

### Beispiel 3 (erfindungsgemäß)

A) SHP470 FT2050, Schichtdicke ca. 2,3µm + AS4700, Schichtdicke ca. 9,5µm
B) Blend-Komponente Schichtdicke 1,9mm
C) Polycarbonat, Schichtdicke 4,8mm,
   wobei B) mit C) hinterspritzt wird.
D) SHP470 FT2050, Schichtdicke 2,3µm
E) AS4700, Schichtdicke 9,5µm

### Beispiel 4 (Vergleich)

A) SHP470 FT2050, Schichtdicke ca. 0,8µm + AS4700, Schichtdicke ca. 4,3µm
B) Blend-Komponente, Schichtdicke 1,9mm
C) Polycarbonat, Schichtdicke 4,8mm
   wobei B) mit C) hinterspritzt wird.
D) SHP470 FT2050, Schichtdicke 0,8µm
E) AS4700, Schichtdicke 4,3µm

Die Ergebnisse sind in der folgenden **Tabelle 1** zusammengefasst:

| | Bewitterungszeit bis zum Auftreten erster Risse, Mikrorisse und/oder Delaminationen | Glanzänderung ΔGlanz / Glanzeinheiten | | | | | |
|---|---|---|---|---|---|---|---|
| | | nach 1000h | nach 2000h | nach 3000h | nach 4000h | nach 5000h | nach 6000h |
| Bsp. 1 (erfindungsgemäß) | 5500h | -2,0 | -2,9 | -1,4 | -3,5 | -3,8 (4437h) | -5,4 (5441h) |
| Bsp. 2 (erfindungsgemäß) | 5500h | 1,9 | 2,1 | 1,8 | | -0,3 (4437h) | -1,2 (5441h) |
| Bsp. 3 (erfindungsgemäß) | 6000h | -2,1 | -1,3 | -1,4 | -4,4 | -4,6 (4437h) | -4,0 |
| Bsp. 4 (Vergleich) | 3000h | 1,2 | 0 | 0 | -3,7 | | |

Tabelle 1 zeigt, dass die erfindungsgemäßen Beispiele 1 bis 3 bei Bewitterung ein deutliches besseres Verhalten bzgl. Rissbildung und Delamination und ein besseres Glanzverhalten als das Vergleichsbeispiel 4 aufweisen. Es wird hiermit demonstriert, dass es eine notwendige Mindestschichtdicke für Primer und Deckschicht gibt, da es sonst zu frühzeitigem Ausfallen in der Bewitterung kommt.Vergleichsbeispiele 5 und 6 zeigen den gleichen Aufbau. Sie unterscheiden sich von den erfindungsgemäßen Beispielen durch das Fehlen von Schicht A und B, wobei bei Beispiel 6 durch das Hinterlegen einer schwarzen Platte die nicht transparente Schicht simuliert wird. Das Hinterlegen einer schwarzen Platte ist erforderlich, da bei einer mit dem übrigen Schichtaufbau fest verbundenen nicht transparenten Schicht sich die Transmissions- und Trübungswerte nicht messen lassen. Daher wird wahrend der Bewitterung Bsp. 9 mit einer schwarzen Makrolonplatte hinterlegt. Zum Messen wird die schwarze Platte entfernt.

### Beispiel 5 (Vergleich)

A) keine Lackierung
B) keine nicht-transparente Komponente
C) Polycarbonat, Schichtdicke 3,2mm
D) PMMA + 10% CGL479 + 2% Tinuvin 622, Schichtdicke 2,7µm
E) AS4700, Schichtdicke 5,8µm

### Bewittert in Xe-WOM, Risse treten bei 8000 Std auf

### Beispiel 6 (Vergleich, wie Beispiel 5 aber schwarz hinterlegt bei der Bewitterung)

A) keine Lackierung
B) Schwarze Kunststoffplatte Schichtdicke 3,2mm, die hinter Schicht C mit Klemmen fixiert wird.
C) Polycarbonat, Schichtdicke 3,2mm
D) PMMA + 10% CGL479 + 2% Tinuvin 622, Schichtdicke 2,9µm
E) AS4700, Schichtdicke 5,7µm

### Bewittert in Xe-WOM, Risse treten bei 6000Std auf

### Die Ergebnisse sind in der folgenden Tabelle 2 zusammengefasst:

| Bewitterungszeit in h | Yellownessindex | | Trübung Haze / % | |
|---|---|---|---|---|
| | Beispiel 5 | Beispiel 6 | Beispiel 5 | Beispiel 6 |
| 0 | 1,21 | 1,13 | 0,2 | 0,2 |
| 1000 | 0,88 | 0,98 | 0,8 | 0,9 |
| 1979 | 1,33 | 1,44 | 1,1 | 1,1 |
| 3020 | 1,62 | 1,77 | 1,2 | 1,5 |
| 4000 | 2,03 | 2,10 | 1,3 | 1,5 |
| 5021 | 2,49 | 2,37 | 1,3 | 1,5 |
| 6010 | 3,48 | 2,94 | 1,93 | 1,81 |
| 6990 | 4,71 | | 2,7 | |
| 8000 | 6,36 | | 4,00 | |

Beispiel 5 und 6 zeigen, dass es bei schwarz hinterlegten bzw. hinterspritzten Proben in der Bewitterung bei sonst gleichem Aufbau schneller zu Rissen kommt als bei transparenten Proben.

Aus diesen Ergebnissen geht hervor, dass Mehrschichtsysteme mit intransparenten Schichten eine schlechte Bewitterungsstabilität aufweisen. Schichtdicken, die im transparenten Aufbau eine gute Bewitterung zeigen, sind für Systeme (Mehrschichtaufbauten) mit nicht transparenten Schichten nicht geeignet. Daher war die Aufgabe ein System bereit zu stellen, dass auch bei nicht transparenter Schicht ein gutes Eigenschaftsprofil bzgl. Witterungsstabilität, Oberflächenqualität (optischen Eigenschaften), einer höheren KratzfestigkeitChemikalienbeständigkeit sowie Lebensdauer und Haftung erzielt wird. **Vergleich von SHP470 FT 2050 und SHP470-Primer bei**

### schwarz hinterlegten Platten:

### Beispiel 7 - schwarz hinterlegt!

A) keine Lackierung
B) Schwarz eingefärbte Kunststoffplatte, Dicke 3,2mm
C) Polycarbonat, Schichtdicke 3,2mm, wobei Schicht C) mit Schicht B) hinterlegt ist.
D) SHP470 FT 2050, Schichtdicke 1,8µm
E) AS4700, Schichtdicke 4,7µm

### Bewittert in Xe-WOM, Risse treten bei 7500Std auf

### Beispiel 8 - schwarz hinterlegt!

A) keine Lackierung
B) Schwarz eingefärbte Kunststoffplatte, Dicke 3,2mm
C) Polycarbonat, Schichtdicke 3,2mm, wobei Schicht C) mit Schicht B) hinterlegt ist
D) SHP470, Schichtdicke 1,8µm
E) AS4700, Schichtdicke 6,5µm

### Bewittert in Xe-WOM, Risse treten bei 5500Std auf

### Die Ergebnisse sind in der folgenden Tabelle 3 zusammengefasst:

| Bewitterungszeit in h | Yellownessindex | | Trübung Haze / % | |
|---|---|---|---|---|
| | Beispiel 7 | Beispiel 8 | Beispiel 7 | Beispiel 8 |
| **0** | -8,75 | -9,66 | 0,8 | 0,6 |
| **1000** | -8,55 | -9,30 | 1,6 | 0,9 |
| **1985** | -6,56 | -6,85 | 1,8 | 1,1 |
| **2500** | -5,69 | -5,89 | 2,2 | 1,2 |
| **3000** | -4,98 | -4,85 | 2,2 | 1,4 |
| **3500** | -4,29 | -3,69 | 2,4 | 1,4 |
| **4000** | -3,54 | -2,55 | 2,6 | 1,5 |
| **4494** | -2,39 | -1,21 | 2,9 | 1,8 |
| **4986** | -1,70 | 0,49 | 3,1 | 2,0 |
| **5500** | -0,65 | 4,35 | 3,3 | 2,1 |
| **5973** | 0,08 | | 3,5 | |
| **6500** | 1,60 | | 3,7 | |
| **6992** | 3,16 | | 3,9 | |
| **7505** | 4,86 | | 4,33 | |

Fazit: Der SHP470-Primer ist bei schwarz hinterlegten Proben nicht so leistungsstark wie der SHP 470 FT 2050-Primer.

### Untersuchung der Haftung der UV-härtenden Schutzschicht auf dem PC-Substrat:

Es wurden folgende Haftungstests durchgeführt:
(a) Klebebandabriss (verwendetes Klebeband 3M Scotch 898) mit Gitterschnitt (analog zu ISO 2409 bzw. ASTM D 3359), und
(b) Klebebandabriss nach 1, 2, 3 und 4 Stunden Lagerung in kochendem Wasser (analog ISO 2812-2 und ASTM 870-02).

Alle hier vermerkten Beispiele zeigten sowohl nach (a) als auch nach (b) volle Haftung (ISO Kennwert: 0 bzw. ASTM Kennwert: 5B).

### Messung der Abriebsbeständigkeit und Bestimmung des Taber-Wertes:

Zunächst wurde der Anfangs-Haze-Wert der mit der UV-gehärteten ersten Schicht beschichteten PC-Platte (erhalten aus c)) gemäß ASTM D 1003 mit einem Haze Gard Plus der Firma Byk-Gardner bestimmt. Anschließend wurde die beschichtete Seite der Probe mittels eines Taber Abraser Modell 5131 der Firma Erichsen gemäß ISO 52347 bzw. ASTM D 1044 unter Verwendung der CS10F Räder (Typ IV; graue Farbe) verkratzt. Durch Bestimmung des End-Haze-Wert nach 1000 Umdrehungen mit 500 g Auflagegewicht ließ sich ein ΔHaze-Wert(Probe) ermitteln.

Im erfindungsgemäßen Sinne soll die Schutzschicht eine ausreichend hohe Kratzfestigkeit aufweisen. Dieses Kriterium ist im erfindungsgemäßen Sinne erreicht bei einer Trübungszunahme von weniger als 4% nach 100 Zyklen Tabertest (durchgeführt gemäß UN ECE Regulation 43, Anhang 3, Absatz 4) für die innenliegende Schicht A bzw. eine Trübungszunahme kleiner 10% nach 500 Zyklen für die außenliegende Schicht E.

### Messung der Beständigkeit gegenüber verschiedenen Lösemitteln

Die Proben wurden horizontal auf einer Laborbank bei Raumtemperatur (z.B. 23 °C) gelagert. Ein Wattebausch, der mit Aceton getränkt ist, wurde auf die Probe gelegt und mit einem Uhrglas abgedeckt um das Verdunsten des Lösemittels zu verhindern. Nach verschiedenen Einwirkzeiten (1 min, 5 min, 15 min, 30 min) wurden das Uhrglas und der Wattebausch entfernt. Die Probenoberfläche wurde vorsichtig mit einen weichen Tuch getrocknet. Die Oberfläche wurde visuell beurteilt. Im Falle keiner sichtbaren Beschädigung wird das Resultat als "ok" vermerkt, im Falle sichtbarer Beschädigung wird das Resultat mit "nicht ok" bezeichnet. Im erfindungsgemäßen Sinne soll die Schutzschicht eine ausreichend hohe Beständigkeit gegenüber xyxlol, Butylacetat, Isopropano, Aceton und Isooctan aufweisen. Dieses Kriterium ist im erfindungsgemäßen Sinne erreicht, wenn nach 1 Stunde keine sichtbare Beschädigung (entsprechend einer Bezeichnung mit "ok") vorliegt.

### Messung der Beständigkeit gegenüber Testbenzing

Die Medienbeständigkeit gegen Benzin unter Last wird gemäß UN ECE Regulation 43, Anhang 3, Absatz 11 bestimmt. Dazu wird das Prüfmuster wie ein waagerechter Hebelarm eingespannt. Am freien Ende des Musters ist im Abstand von 102mm vom Auflagepunkt eine Last aufzubringen, sodass eine Kraft von ungefähr 6,9MPa ausgeübt wird. Während das Prüfmuster belastet wird, wird das Testbenzin (bestehend aus 50vol% Toluol, 30vol% 2,2,4-Trimethylpentan, 15vol% 2,2,4-Trimethyl-1-penten und 5vol% Ethanol) mit einer weichen Bürste auf die Oberfläche des Prüfmusters aufgetragen. Die Bürste wird 10mal über das Prüfmuster gestrichen und vor jedem Strich angefeuchtet. Die Prüfung ist bestanden, wenn keine Risse oder offensichtliche Verluste der Transparenz zu erkennen sind.

### Messung der Bleistifthärte

### Die Bleistifthärte wurde analog ISO 15184 bzw. ASTM D 3363 gemessen.

Der Bleistift wurde zur Vorbereitung im 90° Winkel über ein Schleifpapier (Nr. 400) gezogen, um eine scharfkantige plane Fläche zu erhalten. Die zu messende Probe muss auf einem ebenen waagerechten Untergrund liegen. Der Bleistift wurde in einen Schlitten mit 0,75 kg (+/- 10 g) Auflagegewicht eingespannt, dieser wurde auf die zu prüfende Oberfläche gestellt und sofort mindestens 7 mm über die Oberfläche geschoben. Mit einem feuchten Tuch (evtl. Isopropanol verwenden) wurden die Markierungen des Graphitstiftes von der Oberfläche entfernt und diese auf Beschädigungen untersucht.

Die Härte des härtesten Bleistiftes, der die Oberfläche nicht beschädigt hat, ist die sogenannte Bleistifthärte:
Härteskala nach ISO 15184 (1998 E) von weich nach hart:
9B - 8B - 7B - 6B - 5B - 4B - 3B - 2B - B - HB - F - H - 2H - 3H - 4H - 5H - 6H - 7H - 8H - 9H

### Auswahl der Lacksvsteme aufgrund ihrer Chemikalienbeständigkeit und Abriebfestigkeit

Erfindungsgemäße Lacksysteme zeichnen sich durch geringe initiale Trübung (<1%haze), durch gute Chemikalienbeständigkeit gegenüber Xylol, Butylacet, Isopropanol, Aceton und Isooctan (beständig, d.h. keine sichtbare Schädigung, Risse, Trübung, Delamination für mindestens 30min Einwirkzeit bei RT), gute Haftung (Kennwert 0 nach Klebebandabriss auch nach 4 Std Kochtest), sowie gute Abriebbeständigkeit (Trübungszunahme von weniger als 4% nach 100 Zyklen Tabertest (durchgeführt gemäß UN ECE Regulation 43, Anhang 3, Absatz 4) für die innenliegende Schicht A bzw. eine Trübungszunahme kleiner 10% nach 500 Zyklen für die außenliegende Schicht E.)

In der folgenden Tabelle werden entsprechende Messergebnisse dargestellt.

Die Medienbeständigkeit gegen Benzin unter Last gemäß UN ECE Regulation 43, Anhang 3, Absatz 11 muss gegeben sein.

Besonders gut geeignet sind daher Kratzfestlacke, die auf Siloxanmatrix basieren, wie zum Beispiel der AS4700 und der AS4000 der Firma Momentive Performance Materials.

| | | | | | |
|---|---|---|---|---|---|
| **Beschichtung** | AS 4700 mit SHP470 FT 2050 Primer (Momentive) | AS 4000 mit SHP 401 Primer (Momentive) | PHC 587 C (Momentive) | UVHC 3000 (Momentive) | UVT 610 (RedSpot) |
| **Schichtdicke** / **µm** | Primer:2,1 - 2,7 Topcoat 4,7 - 5,5 | 7,3-7,6 | 7,63 -7,80 | 8,7-9,6 | 5,3-6,9 |

| **Optische Eigenschaften** | | | | | |
|---|---|---|---|---|---|
| **Yellownessindex der Beschichtung auf M3103** | 1,49 | 1,34 | 1,01 | 0,95 | 1,49 (auf AL2647) |
| **Initiale Trübung / % auf M3103** | 0,55 | 0,25 | 0,43 | 0,63 | 0,49 (auf AL2647) |

| **Chemikalienbeständigkeit** | | | | | |
|---|---|---|---|---|---|
| **Xylol** | 1 h o.k. | 1 h o.k. | 1 h o.k. | 1 h o.k. | 1 h o.k. |
| **Butylacetat** | 1 h o.k. | 1 h o.k. | 1 h o.k. | 1 h o.k. | 1 h o.k. |
| **Isopropanol** | 1 h o.k. | 1 h o.k. | 1 h o.k. | 1 h o.k. | 1 h o.k. |
| **Aceton** | 1 h o.k. | 1 h o.k. | 1 h o.k. | 1 h o.k. | 1 h o.k. |
| **Isooctan** | < 1 h | 1 h o.k. | 1 h o.k. | 1 h o.k. | 1 h o.k. |

| **Chemikalienbeständigkeit unter Last gemäß UN ECE R43 Anhang 3, Absatz 11, Testbenzin bestehend aus 50vol% Toluol, 30vol% 2,2,4-Trimethylpentan, 15vol% 2,2,4-Trimethyl-1-penten und 5vol% Ethanol.** | | | | | |
|---|---|---|---|---|---|
| **Testbenzin** | Ohne Beanstandung | Ohne Beanstandung | Ohne Beanstandung | Ohne Beanstandung | Ohne Beanstandung |

| **Abrieb-/ Kratzbeständigkeit** | | | | | |
|---|---|---|---|---|---|
| **Taber** / **Δhaze 100 Zyklen** | 0,58 | 1,22 | 2,29 | 2,17 | 12,1 |
| **Taber / Δhaze 1000 Zyklen** | 2,22 | 4,33 | 6,45 | 5,94 | 30,6 |
| **Bleistifthärte** | 2H | H | H | 2H | F |

| **Haftung auf Polycarbonat nach Gitterschnitt und Klebebandabriss nach 4 h Lagerung in 100°C heißem Wasser, Bewertung gemäß ISO 2812-2, ISO-Kennwert = 0 bedeutet volle Haftung).** | | | | | |
|---|---|---|---|---|---|
| **Haftung** | 0 | 0 | 0 | 0 | 0 |

## Patentansprüche

1. Ein Mehrschichtaufbau enthaltend die folgenden Schichten:
a) eine transparente Schicht A enthaltend einen Polysiloxanlack mit einer Schichtdicke von 3 µm - 20 µm,
b) eine nicht-transparente Schicht B basierend auf einem Polymerblend enthaltend Polycarbonat mit einer Schichtdicke von 1 mm bis 20 mm
c) eine transparente Schicht C mit einer Schichtdicke von 1 mm bis 20 mm, wobei Schicht C ein thermoplastischer Kunststoff ist,
d) eine transparente Schicht D als UV Schutzschicht mit einer Schichtdicke von 1 µm bis 6 µm, wobei Schicht D eine Primerschicht ist
e) eine transparente Schicht E enthaltend einen Polysiloxanlack mit einer Schichtdicke von 3 µm bis 25 µm,
wobei "transparent" bedeutet, dass der Kunststoff eine Lichttransmission von mindestens 6 % aufweist, in Anlehnung an ASTM 1003 bzw. ISO 13468; angegeben in % und Lichtart D65/10°.

2. Mehrschichtaufbau gemäß Anspruch 1, wobei Schicht A eine Schichtdicke von 5 µm - 15 µm, Schicht B und Schicht C eine Schichtdicke von jeweils 1 mm bis 18 mm, Schicht D eine Schichtdicke von 1,2 µm bis 5 µm und Schicht E eine Schichtdicke von 4 µm bis 15 µm aufweisen.

3. Mehrschichtaufbau gemäß Anspruch 1 oder 2, wobei Schicht A eine Schichtdicke von 6 µm bis 12 µm aufweist.

4. Mehrschichtaufbau gemäß einem der vorhergehenden Ansprüche , wobei Schicht A eine Schichtdicke von 6 µm bis 12 µm und Schicht E eine Schichtdicke von 4 µm bis 15 µm aufweisen.

5. Mehrschichtaufbau gemäß einem oder mehreren der Ansprüche 1bis 4, wobei Schicht A und Schicht E einen Polysiloxanlack enthalten, wobei zwischen Schicht B und dem Polysiloxanlack der Schicht A eine Primerschicht aufgebracht sein kann.

6. Mehrschichtaufbau gemäß Anspruch 5, wobei Schicht A oder Schicht E oder Schicht A und E einen UV Absorber enthalten.

7. Mehrschichtaufbau gemäß Anspruch 6, wobei der UV Absorber ausgewählt ist aus mindestens einem aus der Gruppe der Benzophenone und Resorcine .

8. Mehrschichtaufbau gemäß einem oder mehreren der Ansprüche 1 bis 7, wobei Schicht B aus einem Polymerblend ist.

9. Mehrschichtaufbau gemäß Anspruch 8, wobei das Polymerblend ein Polycarbonat und einen Polyester enthält.

10. Mehrschichtaufbau gemäß Anspruch 1, wobei der thermoplastische Kunststoff ausgewählt ist aus der Gruppe bestehend aus Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), Polyamid, cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) weiter bevorzugt Polycarbonat, Copolycarbonat, Polyestercarbonat, aromatische Polyester oder Polymethylmethacrylat, oder Mischungen der genannten Komponenten.

11. Mehrschichtaufbau gemäß Anspruch 1 und 10, wobei Schicht C einen UV Absorber oder einen IR Absorber oder eine Mischung aus UV und IR Absorber enthält.

12. Mehrschichtaufbau gemäß einem oder mehreren der vorhergehenden Ansprüche, wobei die Primerschicht auf Poly(alkyl)acrylat basiert, die mindestens einen UV Absorber ausgewählt aus der Gruppe umfassend Benzophenone, Resorcine und Triazine enthält.

13. Mehrschichtaufbau gemäß einem der vorhergehenden Ansprüche, in den Funktionselemente wie Heizelemente, Antennen, Strukturelemente für das Wassermanagement eingebunden sind.

14. Mehrschichtaufbau gemäß einem oder mehreren der vorhergehenden Ansprüche, wobei
**Schicht A** ein Polysiloxan mit einem Primerschicht auf Basis Poly(alkyl)acrylat ist und einen UV Absorber aus der Strukturklasse der Benzophenone, Resorcine oder Triazine enthält,
**Schicht B** ein Polymerblend mit einer Zusammensetzung umfassend die Polymere al bis a3, wobei
al) 10 bis 100 Gew.-Teile, bevorzugt 60 bis 95 Gew.-Teile, besonders bevorzugt 75 bis 95 Gew.-Teile, insbesondere 85 bis 95 Gew.-Teile (bezogen auf die Summe der Komponenten A) und B) mindestens einer Komponente ausgewählt aus der Gruppe bestehend aus aromatischem Polycarbonat, aromatischem Polyestercarbonat, Polymethylmethacrylat-(Co)Polymer und Polystyrol-(Co)Polymer, ist und
a2) 0 bis 90 Gew.-Teile, bevorzugt 5 bis 40 Gew.-Teile, besonders bevorzugt 5 bis 25 Gew.-Teile, insbesondere 5 bis 15 Gew.-Teile (bezogen auf die Summe der Komponenten A)und B) mindestens eines Propfpolymerisats,
a3) optional kautschukfreies Vinylhomopolymerisat und/oder kautschukfreies Vinylcopolymerisat
wobei sich die Gewichtsteile der Komponenten al bis a3 zu 100 addieren.
**Schicht C** Polycarbonat, Copolycarbonat oder Polyestercarbonat ist, das UV Absorber und/oder IR Absorber enthalten kann,
**Schicht D** eine Primerschicht ist und der Primer erhältlich ist nach Aushärten aus einer Zusammensetzung
a) 100.000 Gewichtsteilen eines Bindermaterials;
b) 0 bis 900.000 Gewichtsteile eines oder mehrerer Lösemittel,
c) 1 bis 6.000, bevorzugt 2.000-5.000 Gewichtsteile einer Verbindung der Formel (III):
d) 0 bis 5.000 Gewichtsteile weiterer lichtstabilisierender Substanzen 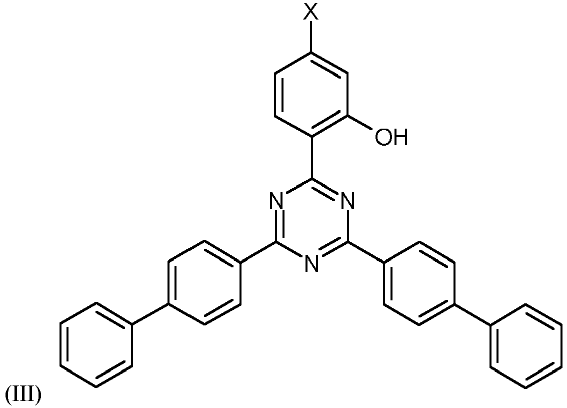
wobei X = OR⁶, OCH₂CH₂OR⁶, OCH₂CH(OH)CH₂OR⁶ oder OCH(R⁷)COOR⁸, worin
R⁶ = verzweigtes oder unverzweigtes C₁-C₁₃-Alkyl, C₂-C₂₀-Alkenyl, C₆-C₁₂-Aryl oder -CO-C₁-C₁₈-Alkyl,
R⁷ = H oder verzweigtes oder unverzweigtes C₁-C₈-Alkyl, und
R⁸ = C₁-C₁₂-Alkyl; C₂-C₁₂-Alkenyl oder C₅-C₆-Cycloalkyl sind,
der Schicht D ein Folienverbund aus Polycarbonat oder Polymethylmethacrylat und einer Funktionsschicht ist.

## Claims

1. A multilayer construction containing the following layers:
a) a transparent layer A containing a polysiloxane lacquer having a layer thickness of 3 µm-20 µm,
b) a non-transparent layer B based on a polymer blend containing polycarbonate having a layer thickness of 1 mm to 20 mm,
c) a transparent layer C having a layer thickness of 1 mm to 20 mm, wherein layer C is a thermoplastic plastic,
d) a transparent layer D as a UV protection layer having a layer thickness of 1 µm to 6 µm, wherein layer D is a primer layer,
e) a transparent layer E containing a polysiloxane lacquer having a layer thickness of 3 µm to 25 µm
wherein "transparent" is to be understood as meaning that the plastic has a light transmission of at least 6% according to ASTM 1003/ISO 13468; reported % and light type D65/10°.

2. Multilayer construction according to Claim 1, wherein layer A has a layer thickness of 5 µm-15 µm, layer B and C have a layer thickness of 1 mm to 18 mm in each case, layer D has a layer thickness of 1.2 µm to 5 µm and layer E has a layer thickness of 4 µm to 15 µm.

3. Multilayer construction according to Claim 1 or 2, wherein layer A has a layer thickness of 6 µm to 12 µm.

4. Multilayer construction according to any of the preceding Claims, wherein layer A has a layer thickness of 6 µm to 12 µm and layer E has a layer thickness of 4 µm to 15 µm.

5. Multilayer construction according to one or more of Claims 1 to 4, wherein layer A and layer E contain a polysiloxane lacquer, wherein between layer B and the polysiloxane lacquer of layer A a primer layer may be applied.

6. Multilayer construction according to Claim 5, wherein layer A or layer E or layer A and E contain a UV absorber.

7. Multilayer construction according to Claim 6, wherein the UV absorber is selected from at least one from the group of benzophenones and resorcinols.

8. Multilayer construction according to one or more of Claims 1 to 7, wherein layer B is made of a polymer blend.

9. Multilayer construction according to Claim 8, wherein the polymer blend contains a polycarbonate and a polyester.

10. Multilayer construction according to Claim 1, wherein the thermoplastic plastic is selected from the group consisting of polycarbonate, copolycarbonate, polyestercarbonate, polystyrene, styrene copolymers, aromatic polyesters such as polyethylene terephthalate (PET), PET-cyclohexanedimethanol copolymer (PETG), polyethylene naphthalate (PEN), polybutylene terephthalate (PBT), polyamide, cyclic polyolefin, poly- or copolyacrylates and poly- or co-polymethacrylate such as for example poly- or co-polymethacrylates (such as PMMA) and copolymers with styrene such as for example transparent polystyrene acrylonitrile (PSAN), thermoplastic polyurethanes, polymers based on cyclic olefins (e.g. TOPAS®, a commercially available product from Ticona), more preferably polycarbonate, copolycarbonate, polyestercarbonate, aromatic polyester or polymethylmethacrylate or mixtures of the recited components.

11. Multilayer construction according to Claim 1 and 10, wherein layer C contains a UV absorber or an IR absorber or a mixture of UV and IR absorber.

12. Multilayer construction according to one or more of the preceding claims, wherein the primer layer is based on poly(alkyl) acrylate and contains at least one UV absorber selected from the group comprising benzophenones, resorcinols and triazines.

13. Multilayer construction according to any of the preceding claims into which functional elements such as heating elements, antennae, structural elements for water management are integrated.

14. Multilayer construction according to one or more of the preceding claims, wherein **layer A** is a polysiloxane with a primer layer based on poly(alkyl) acrylate and contains a UV absorber from the structure class of the benzophenones, resorcinols or triazines,
**layer B** is a polymer blend having a composition comprising the polymers a1 to a3,
wherein
a1) 10 to 100 parts by weight, preferably 60 to 95 parts by weight, particularly preferably 75 to 95 parts by weight, in particular 85 to 95 parts by weight, (based on the sum of the components A) and B)) of at least one component is selected from the group consisting of aromatic polycarbonates, aromatic polyestercarbonate, polymethylmethacrylate copolymer and polystyrene copolymer and
a2) 0 to 90 parts by weight, preferably 5 to 40 parts by weight, particularly preferably 5 to 25 parts by weight, in particular 5 to 15 parts by weight, (based on the sum of the components A) and B)) of at least one graft polymer,
a3) optionally rubber-free vinyl homopolymer and/or rubber-free vinyl copolymer wherein the parts by weight of the components a1 to a3 sum to 100.
**layer C** is a polycarbonate, copolycarbonate or polyestercarbonate which may contain UV absorbers and/or IR absorbers,
**layer D** is a primer layer and the primer is obtainable after curing from a composition
a) 100,000 parts by weight of a binder material;
b) 0 to 900,000 parts by weight of one or more solvents,
c) 1 to 6000, preferably 2000-5000 parts by weight of a compound of formula (III):
d) 0 to 5000 parts by weight of further light-stabilizing substances 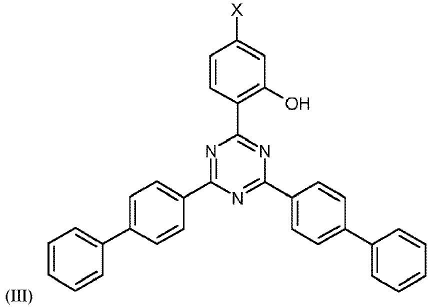
wherein X = OR⁶, OCH₂CH₂OR⁶, OCH₂CH (OH) CH₂OR⁶ or OCH(R⁷)COOR⁸, where
R⁶ = branched or unbranched C₁-C₁₃-alkyl, C₂-C₂₀-alkyl, C₆-C₁₂-aryl or -CO-C₁-C₁₈-alkyl,
R₇ = H or branched or unbranched C₁-C₁₈-alkyl and
R⁸ = C₁-C₁₂-alkyl; C₂-C₁₂-alkenyl or C₅-C₆-cycloalkyl,
layer D is a film composite of polycarbonate or polymethylmethacrylate and a functional layer.

## Revendications

1. Structure multicouche contenant les couches suivantes :
a) une couche transparente A contenant un vernis de polysiloxane en une épaisseur de couche de 3 µm à 20 µm,
b) une couche non transparente B à base d'un mélange de polymères contenant un polycarbonate en une épaisseur de couche de 1 mm à 20 mm,
c) une couche transparente C en une épaisseur de couche de 1 mm à 20 mm, la couche C étant un plastique thermoplastique,
d) une couche transparente D en tant que couche de protection contre les UV en une épaisseur de couche de 1 µm à 6 µm, la couche D étant une couche d'apprêt primaire,
e) une couche transparente E contenant un vernis de polysiloxane en une épaisseur de couche de 3 µm à 25 µm,
« transparent » signifiant que le plastique présente une transmission de la lumière d'au moins 6 % conformément à ASTM 1003 ou ISO 13468 ; indiquée en % et avec le type de lumière D65/10°.

2. Structure multicouche selon la revendication 1, dans laquelle la couche A présente une épaisseur de couche de 5 µm à 15 µm, la couche B et la couche C présentent chacune une épaisseur de couche de 1 mm à 18 mm, la couche D présente une épaisseur de couche de 1,2 µm à 5 µm, et la couche E présente une épaisseur de couche de 4 µm à 15 µm.

3. Structure multicouche selon la revendication 1 ou 2, dans laquelle la couche A présente une épaisseur de couche de 6 µm à 12 µm.

4. Structure multicouche selon l'une quelconque des revendications précédentes, dans laquelle la couche A présente une épaisseur de couche de 6 µm à 12 µm et la couche E présente une épaisseur de couche de 4 µm à 15 µm.

5. Structure multicouche selon une ou plusieurs des revendications 1 à 4, dans laquelle la couche A et la couche E contiennent un vernis de polysiloxane, une couche d'apprêt primaire pouvant être appliquée entre la couche B et le vernis de polysiloxane de la couche A.

6. Structure multicouche selon la revendication 5, dans laquelle la couche A ou la couche E ou la couche A et la couche E contiennent un absorbeur UV.

7. Structure multicouche selon la revendication 6, dans laquelle l'absorbeur UV est choisi parmi au moins un du groupe constitué par les benzophénones et les résorcines.

8. Structure multicouche selon une ou plusieurs des revendications 1 à 7, dans laquelle la couche B est à base d'un mélange de polymères.

9. Structure multicouche selon la revendication 8, dans laquelle le mélange de polymères contient un polycarbonate et un polyester.

10. Structure multicouche selon la revendication 1, dans laquelle le plastique thermoplastique est choisi dans le groupe constitué par le polycarbonate, le copolycarbonate, le polyester-carbonate, le polystyrène, les copolymères de styrène, les polyesters aromatiques tels que le polyéthylène téréphtalate (PET), le copolymère de PET-cyclohexanediméthanol (PETG), le polyéthylène naphtalate (PEN), le polybutylène téréphtalate (PBT), le polyamide, une polyoléfine cyclique, les poly- ou copolyacrylates et les poly- ou copolyméthacrylates tels que p. ex. les poly- ou copolyméthacrylates de méthyle (tels que le PMMA), ainsi que les copolymères contenant du styrène, tels que p. ex. le polystyrène-acrylonitrile transparent (PSAN), les polyuréthanes thermoplastiques, les polymères à base d'oléfines cycliques (p. ex. TOPAS®, un produit commercial de la société Ticona), de manière davantage préférée le polycarbonate, le copolycarbonate, le polyester-carbonate, les polyesters aromatiques ou le polyméthacrylate de méthyle, ou les mélanges des composants mentionnés.

11. Structure multicouche selon les revendications 1 et 10, dans laquelle la couche C contient un absorbeur UV ou un absorbeur IR ou un mélange d'absorbeurs UV et IR.

12. Structure multicouche selon une ou plusieurs des revendications précédentes, dans laquelle la couche d'apprêt primaire est à base de polyacrylate d'alkyle, qui contient au moins un absorbeur UV choisi dans le groupe comprenant les benzophénones, les résorcines et les triazines.

13. Structure multicouche selon l'une quelconque des revendications précédentes, dans laquelle des éléments fonctionnels tels que des éléments chauffants, des antennes, des éléments structuraux pour la gestion de l'eau sont intégrés.

14. Structure multicouche selon une ou plusieurs des revendications précédentes, dans laquelle
**la couche A** est un polysiloxane comprenant une couche d'apprêt primaire à base de polyacrylate d'alkyle, et contient un absorbeur UV de la classe structurale des benzophénones, des résorcines ou des triazines,
**la couche B** est un mélange de polymères ayant une composition comprenant les polymères a1 à a3 :
a1) 10 à 100 parties en poids, de préférence 60 à 95 parties en poids, de manière particulièrement préférée 75 à 95 parties en poids, notamment 85 à 95 parties en poids (par rapport à la somme des composants A) et B)) d'au moins un composant choisi dans le groupe constitué par le polycarbonate aromatique, le polyester-carbonate aromatique, un (co)polymère de polyméthacrylate de méthyle et un (co)polymère de polystyrène, et
a2) 0 à 90 parties en poids, de préférence 5 à 40 parties en poids, de manière particulièrement préférée 5 à 25 parties en poids, notamment 5 à 15 parties en poids (par rapport à la somme des composants A) et B)) d'au moins un polymère greffé,
a3) éventuellement un homopolymère de vinyle sans caoutchouc et/ou un copolymère de vinyle sans caoutchouc,
la somme des parties en poids des composants a1 à a3 étant de 100,
**la couche C** est un polycarbonate, un copolycarbonate ou un polyester-carbonate, qui peut contenir un absorbeur UV et/ou un absorbeur IR,
**la couche D** est une couche d'apprêt primaire, et l'apprêt primaire peut être obtenu par durcissement d'une composition contenant :
a) 100 000 parties en poids d'un matériau liant,
b) 0 à 900 000 parties en poids d'un ou de plusieurs solvants,
c) 1 à 6 000, de préférence 2 000 à 5 000 parties en poids d'un composé de formule (III),
d) 0 à 5 000 parties en poids d'autres substances photostabilisantes, 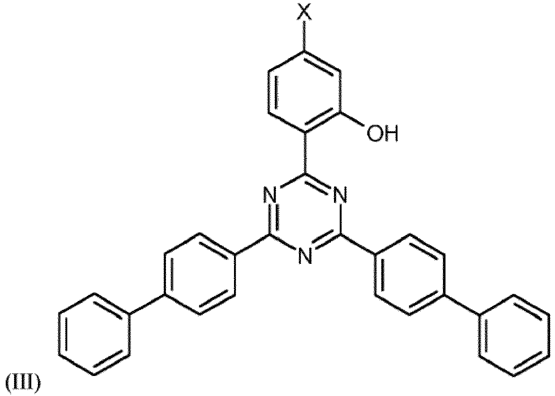
avec X = OR⁶, OCH₂CH₂OR⁶, OCH₂CH (OH) CH₂OR⁶ ou OCH(R⁷)COOR⁸, avec
R₆ = alkyle en C₁-C₁₃ ramifié ou non ramifié, alcényle en C₂-C₂₀, aryle en C₆-C₁₂ ou -CO-alkyle en C₁-C₁₈,
R⁷ = H ou alkyle en C₁-C₈ ramifié ou non ramifié, et
R⁸ = alkyle en C₁-C₁₂, alcényle en C₂-C₁₂ ou cycloalkyle en C₅-C₆,
la couche D est une feuille composite de polycarbonate ou de polyméthacrylate de méthyle et d'une couche fonctionnelle.
